(19) **Europäisches Patentamt**
**European Patent Office**
**Office européen des brevets**

(11) **EP 4 583 055 A1**

(12) **EUROPEAN PATENT APPLICATION**

(43) Date of publication:
**09.07.2025 Bulletin 2025/28**

(51) International Patent Classification (IPC):
**G06T 9/00** $^{(2006.01)}$ **G06T 9/40** $^{(2006.01)}$

(21) Application number: **25150210.0**

(22) Date of filing: **03.01.2025**

(52) Cooperative Patent Classification (CPC):
**G06T 9/001; G06T 9/004; G06T 9/40**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.01.2024 US 202463618118 P**

(71) Applicant: **Comcast Cable Communications, LLC Philadelphia, PA 19103 (US)**

(72) Inventors:
• **TAQUET, Jonathan**
  **Philadelphia, 19103 (US)**
• **LASSERRE, Sébastien**
  **Philadelphia, 19103 (US)**

(74) Representative: **V.O.**
**P.O. Box 87930**
**2508 DH Den Haag (NL)**

(54) **NEIGHBOR-BASED CODING OF POINT CLOUD GEOMETRY INFORMATION**

(57) Systems, apparatuses, methods, and computer-readable media are described herein for determining and/or coding geometry information. Point cloud information (e.g., of a point cloud associated with content) may be predicted. A first plurality of sub-volumes of a point cloud may, for example, be coded based on a second plurality of sub-volumes of a reference point cloud. Geometry information of the second plurality of sub-volumes (e.g., represented by a second type of geometry model) may be used to code geometry information of the first plurality of sub-volumes (e.g., represented by a first type of geometry model).

FIG. 10

Processed by Luminess, 75001 PARIS (FR)

EP 4 583 055 A1

**Description**

## CROSS REFERENCE TO RELATED APPLICATIONS

This application claims the benefit of U.S. Provisional Application No. 63/618,118 filed on January 5, 2024. The above referenced applications are hereby incorporated by reference in their entirety.

## BACKGROUND

An object or scene may be described using volumetric visual data consisting of a series of points. The points may be stored as a point cloud format that includes a collection of points in three-dimensional space. As point clouds can get quite large in data size, sending and processing point cloud data may need a data compression scheme that is specifically designed with respect to the unique characteristics of point cloud data.

## SUMMARY

The following summary presents a simplified summary of certain features. The summary is not an extensive overview and is not intended to identify key or critical elements.

Point cloud information (e.g., of a point cloud associated with content) may be predicted (e.g., between frames). A first plurality of sub-volumes (e.g., a current point cloud) may, for example, be coded based on a second plurality of sub-volumes (e.g., a reference point cloud). Geometry representation models of neighboring sub-volumes, of a current sub-volume, may be converted such that the converted geometry representation models may be of the same type used to represent a geometry of a portion of a point cloud contained in the current sub-volume. Additional geometry information of the neighboring sub-volumes may be obtained to predictively code (e.g., encode or decode) geometry information of the geometry representation model representing the point cloud portion in the current sub-volume. By increasing the amount of relevant geometry information, advantages may be achieved such as higher prediction accuracy, less coding bits and higher compression.

These and other features and advantages are described in greater detail below.

## BRIEF DESCRIPTION OF THE DRAWINGS

Some features are shown by way of example, and not by limitation, in the accompanying drawings. In the drawings, like numerals reference similar elements.

FIG. 1 shows an example point cloud coding system.

FIG. 2 shows an example Morton order.

FIG. 3 shows an example scanning order.

FIG. 4 shows an example neighborhood of cuboids for entropy coding the occupancy of a child cuboid.

FIG. 5 shows an example of a dynamic reduction function DR that may be used in dynamic OBUF.

FIG. 6 shows an example method for coding occupancy of a cuboid using dynamic OBUF.

FIG. 7 shows an example of an occupied cuboid.

FIG. 8A shows an example cuboid corresponding to a TriSoup node.

FIG. 8B shows an example refinement to the TriSoup model.

FIG. 8C shows an example of coding a centroid residual vector.

FIG. 9A and FIG. 9B show examples of voxelization.

FIG. 10 shows an example of a tree-based geometry representation model.

FIG. 11 shows an example of a TriSoup-based geometry representation model

FIG. 12 shows an example process for coding information.

FIG. 13 shows an example of first and second type geometry representation models.

FIG. 14A, FIG. 14B and FIG. 14C show an example of a local space-partitioning tree of a tree-based geometry representation model.

FIG. 15 shows an example of tree-based geometry representation models.

FIG. 16 shows an example of first and second type representation models.

FIG. 17 shows an example of deriving a vertex on an edge of a first sub-volume.

FIG. 18A, FIG. 18B and FIG. 18C show an example of a triangle-based geometry representation model.

FIG. 19 shows an example of triangle-based geometry representation models.

FIG. 20A shows an example method for encoding point cloud geometry.

FIG. 20B shows an example method for decoding point cloud geometry.

FIG. 21 shows a block diagram of an example computer system in which examples of the present disclosure may be implemented.

FIG. 22 shows example elements of a computing device that may be used to implement any of the various devices described herein.

## DETAILED DESCRIPTION

The accompanying drawings and descriptions provide examples. It is to be understood that the examples shown in the drawings and/or described are non-exclusive, and that features shown and described may be practiced in other examples. Examples are provided for operation of point cloud or point cloud sequence encoding or decoding systems. More particularly, the technology disclosed herein may relate to point cloud compression as used in encoding and/or decoding devices and/or systems.

At least some visual data may describe an object or scene in content and/or media using a series of points. Each point may comprise a position in two dimensions (x and y) and one or more optional attributes like color. Volumetric visual data may add another positional dimension to these visual data. For example, volumetric visual data may describe an object or scene in content and/or media using a series of points that each may comprise a position in three dimensions (x, y, and z) and one or more optional attributes like color, reflectance, time stamp, etc. Volumetric visual data may provide a more immersive way to experience visual data, for example, compared to the at least some visual data. For example, an object or scene described by volumetric visual data may be viewed from any (or multiple) angles, whereas the at least some visual data may generally only be viewed from the angle in which it was captured or rendered. As a format for the representation of visual data (e.g., volumetric visual data, three-dimensional video data, etc.) point clouds are versatile in their capability in representing all types of three-dimensional (3D) objects, scenes, and visual content. Point clouds are well suited for use in various applications including, among others: movie post-production, real-time 3D immersive media or telepresence, extended reality, free viewpoint video, geographical information systems, autonomous driving, 3D mapping, visualization, medicine, multi-view replay, and real-time Light Detection and Ranging (LiDAR) data acquisition.

As explained herein, volumetric visual data may be used in many applications, including extended reality (XR). XR encompasses various types of immersive technologies, including augmented reality (AR), virtual reality (VR), and mixed reality (MR). Sparse volumetric visual data may be used in the automotive industry for the representation of three-dimensional (3D) maps (e.g., cartography) or as input to assisted driving systems. In the case of assisted driving systems, volumetric visual data may be typically input to driving decision algorithms. Volumetric visual data may be used to store valuable objects in digital form. In applications for preserving cultural heritage, a goal may be to keep a representation of objects that may be threatened by natural disasters. For example, statues, vases, and temples may be entirely scanned and stored as volumetric visual data having several billions of samples. This use-case for volumetric visual data may be particularly relevant for valuable objects in locations where earthquakes, tsunamis and typhoons are frequent. Volumetric visual data may take the form of a volumetric frame. The volumetric frame may describe an object or scene captured at a particular time instance. Volumetric visual data may take the form of a sequence of volumetric frames (referred to as a volumetric sequence or volumetric video). The sequence of volumetric frames may describe an object or scene captured at multiple different time instances.

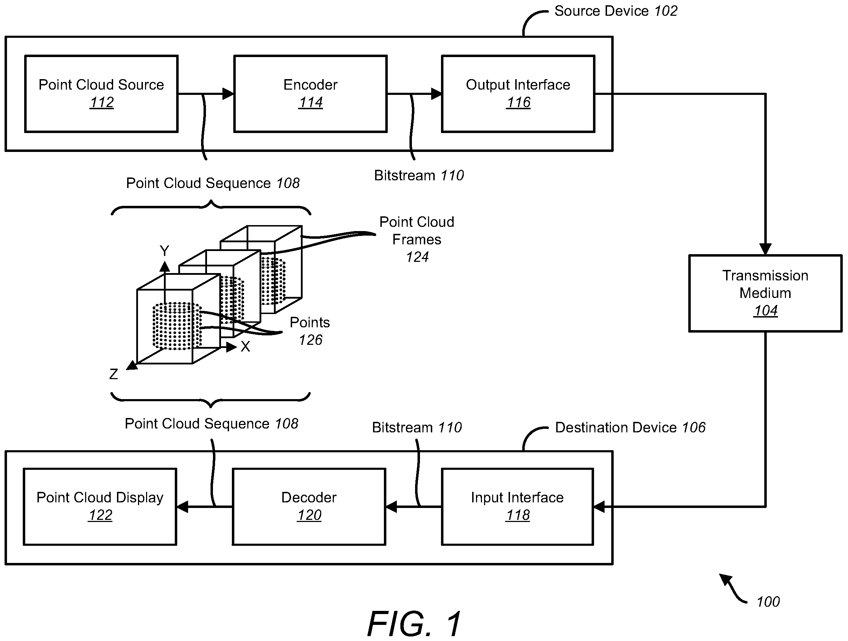

Volumetric visual data may be stored in various formats. A point cloud may comprise a collection of points in a 3D space. Such points may be used create a mesh comprising vertices and polygons, or other forms of visual content. As described herein, point cloud data may take the form of a point cloud frame, which describes an object or scene in content that is captured at a particular time instance. Point cloud data may take the form of a sequence of point cloud frames (e.g., point cloud video). As further described herein, point cloud data may be encoded by a source device (e.g., source device 102 as described herein with respect to FIG. 1) that outputs a bitstream containing the encoded point cloud data. The source device may encode the point cloud data based on point cloud compression coding, for example, geometry-based point cloud compression (G-PCC) coding and/or video-based point cloud compression (V-PCC) coding, or next generation coding. A destination device (e.g., destination device 106 as described herein with respect to FIG. 1) receives the bitstream containing the point cloud data and decodes the bitstream containing the point cloud data. The destination device may decode the point cloud data by performing point cloud decompression coding. The decompression coding may be an inverse process of the point cloud compression coding. The point cloud decompression coding may include, for example, G-PCC coding. Decoding may be used to decompress the point cloud data for display and/or other forms of consumption (e.g., further analysis, storage, etc.). The destination device (or a different device) may include, for example, a renderer for rendering the decoded point cloud data. The renderer may output content, for example, by rendering the point cloud data. The renderer may output content, for example, by rendering the point cloud data along with other data (e.g., audio data).

One format for storing volumetric visual data may be point clouds. A point cloud may comprise a collection of points in 3D space. Each point in a point cloud may comprise geometry information that may indicate the point's position in 3D space. For example, the geometry information may indicate the point's position in 3D space, for example, using three Cartesian coordinates (x, y, and z) and/or using spherical coordinates (r, phi, theta) (e.g., if acquired by a rotating sensor). The positions of points in a point cloud may be quantized according to a space precision. The space precision may be the same or different in each dimension. The quantization process may create a grid in 3D space. One or more points residing within each sub-grid volume may be mapped to the sub-grid center coordinates, referred to as voxels. A voxel may be considered as a 3D extension of pixels corresponding to the 2D image grid coordinates. For example, similar to a pixel being the smallest unit in the example of dividing the 2D space (or 2D image) into discrete, uniform (e.g., equally sized) regions, a voxel may be the smallest unit of volume in the example of dividing 3D space into discrete, uniform regions. A point in a point cloud may comprise one or more types of attribute information. Attribute information may indicate a property of a point's visual appearance. For example, attribute information may indicate a texture (e.g., color) of the point, a material type of the point, transparency information of the point, reflectance information of the point, a normal vector to a surface of the point, a velocity at the point, an acceleration at the point, a time stamp indicating when the point was captured, or a modality indicating how the point was captured (e.g., running, walking, or flying). A point in a point cloud may comprise light field data in the form of multiple view-dependent texture information. Light field data may be another type of optional attribute information.

The points in a point cloud may describe an object or a scene. For example, the points in a point cloud may describe the external surface and/or the internal structure of an object or scene. The object or scene may be synthetically generated by a computer. The object or scene may be generated from the capture of a real-world object or scene. The geometry information of a real-world object or a scene may be obtained by 3D scanning and/or photogrammetry. 3D scanning may include different types of scanning, for example, laser scanning, structured light scanning, and/or modulated light scanning. 3D scanning may obtain geometry information. 3D scanning may obtain geometry information, for example, by moving one or more laser heads, structured light cameras, and/or modulated light cameras relative to an object or scene being scanned. Photogrammetry may obtain geometry information. Photogrammetry may obtain geometry information, for example, by triangulating the same feature or point in different spatially shifted 2D photographs. Point cloud data may take the form of a point cloud frame. The point cloud frame may describe an object or scene captured at a particular time instance. Point cloud data may take the form of a sequence of point cloud frames. The sequence of point cloud frames may be referred to as a point cloud sequence or point cloud video. The sequence of point cloud frames may describe an object or scene captured at multiple different time instances.

The data size of a point cloud frame or point cloud sequence may be excessive (e.g., too large) for storage and/or transmission in many applications. For example, a single point cloud may comprise over a million points or even billions of points. Each point may comprise geometry information and one or more optional types of attribute information. The geometry information of each point may comprise three Cartesian coordinates (x, y, and z) and/or spherical coordinates (r, phi, theta) that may be each represented, for example, using at least 10 bits per component or 30 bits in total. The attribute information of each point may comprise a texture corresponding to a plurality of (e.g., three) color components (e.g., R, G, and B color components). Each color component may be represented, for example, using 8-10 bits per component or 24-30 bits in total. For example, a single point may comprise at least 54 bits of information, with at least 30 bits of geometry information and at least 24 bits of texture. If a point cloud frame includes a million such points, each point cloud frame may require 54 million bits or 54 megabits to represent. For dynamic point clouds that change over time, at a frame rate of 30 frames per second, a data rate of 1.32 gigabits per second may be required to send (e.g., transmit) the points of the point cloud sequence. Raw representations of point clouds may require a large amount of data, and the practical deployment of point-cloud-based technologies may need compression technologies that enable the storage and distribution of point clouds with a reasonable cost.

Encoding may be used to compress and/or reduce the data size of a point cloud frame or point cloud sequence to provide for more efficient storage and/or transmission. Decoding may be used to decompress a compressed point cloud frame or point cloud sequence for display and/or other forms of consumption (e.g., by a machine learning based device, neural network-based device, artificial intelligence-based device, or other forms of consumption by other types of machine-based processing algorithms and/or devices). Compression of point clouds may be lossy (introducing differences relative to the original data) for the distribution to and visualization by an end-user, for example, on AR or VR glasses or any other 3D-capable device. Lossy compression may allow for a high ratio of compression but may imply a trade-off between compression and visual quality perceived by an end-user. Other frameworks, for example, frameworks for medical applications or autonomous driving, may require lossless compression to avoid altering the results of a decision obtained, for example, based on the analysis of the sent (e.g., transmitted) and decompressed point cloud frame.

FIG. 1 shows an example point cloud coding (e.g., encoding and/or decoding) system 100. Point cloud coding system 100 may comprise a source device 102, a transmission medium 104, and a destination device 106. Source device 102 may encode a point cloud sequence 108 into a bitstream 110 for more efficient storage and/or transmission. Source device 102 may store and/or send (e.g., transmit) bitstream 110 to destination device 106 via transmission medium 104. Destination device 106 may decode bitstream 110 to display point cloud sequence 108 or for other forms of consumption (e.g., further analysis, storage, etc.). Destination device 106 may receive bitstream 110 from source device 102 via a storage medium or transmission medium 104. Source device 102 and destination device 106 may include any number of different devices. Source device 102 and destination device 106 may include, for example, a cluster of interconnected computer systems acting as a pool of seamless resources (also referred to as a cloud of computers or cloud computer), a server, a desktop computer, a laptop computer, a tablet computer, a smart phone, a wearable device, a television, a camera, a video gaming console, a set-top box, a video streaming device, a vehicle (e.g., an autonomous vehicle), or a head-mounted display. A head-mounted display may allow a user to view a VR, AR, or MR scene and adjust the view of the scene, for example, based on movement of the user's head. A head-mounted display may be connected (e.g., tethered) to a processing device (e.g., a server, a desktop computer, a set-top box, or a video gaming console) or may be fully self-contained.

A source device 102 may comprise a point cloud source 112, an encoder 114, and an output interface 116. A source device 102 may comprise a point cloud source 112, an encoder 114, and an output interface 116, for example, to encode point cloud sequence 108 into a bitstream 110. Point cloud source 112 may provide (e.g., generate) point cloud sequence 108, for example, from a capture of a natural scene and/or a synthetically generated scene. A synthetically generated scene may be a scene comprising computer generated graphics. Point cloud source 112 may comprise one or more point cloud capture devices, a point cloud archive comprising previously captured natural scenes and/or synthetically generated scenes, a point cloud feed interface to receive captured natural scenes and/or synthetically generated scenes from a point cloud content provider, and/or a processor(s) to generate synthetic point cloud scenes. The point cloud capture devices may include, for example, one or more laser scanning devices, structured light scanning devices, modulated light scanning devices, and/or passive scanning devices.

Point cloud sequence 108 may comprise a series of point cloud frames 124 (e.g., an example shown in FIG. 1). A point cloud frame may describe an object or scene captured at a particular time instance. Point cloud sequence 108 may achieve the impression of motion by using a constant or variable time to successively present point cloud frames 124 of point cloud sequence 108. A point cloud frame may comprise a collection of points (e.g., voxels) 126 in 3D space. Each point 126 may comprise geometry information that may indicate the point's position in 3D space. The geometry information may indicate, for example, the point's position in 3D space using three Cartesian coordinates (x, y, and z). One or more of points 126 may comprise one or more types of attribute information. Attribute information may indicate a property of a point's visual appearance. For example, attribute information may indicate, for example, a texture (e.g., color) of a point, a material type of a point, transparency information of a point, reflectance information of a point, a normal vector to a surface of a point, a velocity at a point, an acceleration at a point, a time stamp indicating when a point was captured, a modality indicating how a point was captured (e.g., running, walking, or flying), etc. One or more of points 126 may comprise, for example, light field data in the form of multiple view-dependent texture information. Light field data may be another type of optional attribute information. Color attribute information of one or more of points 126 may comprise a luminance value and two chrominance values. The luminance value may represent the brightness (e.g., luma component, Y) of the point. The chrominance values may respectively represent the blue and red components of the point (e.g., chroma components, Cb and Cr) separate from the brightness. Other color attribute values may be represented, for example, based on different color schemes (e.g., an RGB or monochrome color scheme).

Encoder 114 may encode point cloud sequence 108 into a bitstream 110. To encode point cloud sequence 108, encoder 114 may use one or more lossless or lossy compression techniques to reduce redundant information in point cloud sequence 108. To encode point cloud sequence 108, encoder 114 may use one or more prediction techniques to reduce redundant information in point cloud sequence 108. Redundant information is information that may be predicted at a decoder 120 and may not be needed to be sent (e.g., transmitted) to decoder 120 for accurate decoding of point cloud sequence 108. For example, Motion Picture Expert Group (MPEG) introduced a geometry-based point cloud compression (G-PCC) standard (ISO/IEC standard 23090-9: Geometry-based point cloud compression). G-PCC specifies the encoded bitstream syntax and semantics for transmission and/or storage of a compressed point cloud frame and the decoder operation for reconstructing the compressed point cloud frame from the bitstream. During standardization of G-PCC, a reference software (ISO/IEC standard 23090-21: Reference Software for G-PCC) was developed to encode the geometry and attribute information of a point cloud frame. To encode geometry information of a point cloud frame, the G-PCC reference software encoder may perform voxelization. The G-PCC reference software encoder may perform voxelization, for example, by quantizing positions of points in a point cloud. Quantizing positions of points in a point cloud may create a grid in 3D space. The G-PCC reference software encoder may map the points to the center coordinates of the sub-grid volume (e.g., voxel) that their quantized locations reside in. The G-PCC reference software encoder may perform geometry analysis using an occupancy tree to compress the geometry information. The G-PCC reference software encoder may entropy encode the result of the geometry analysis to further compress the geometry information. To encode attribute information of a point cloud, the G-PCC reference software encoder may use a transform tool, such as Region Adaptive Hierarchical Transform (RAHT), the Predicting Transform, and/or the Lifting Transform. The Lifting Transform may be built on top of the Predicting Transform. The Lifting Transform may include an extra update/lifting step. The Lifting Transform and the Predicting Transform may be referred to as Predicting/Lifting Transform or pred lift. Encoder 114 may operate in a same or similar manner to an encoder provided by the G-PCC reference software.

Output interface 116 may be configured to write and/or store bitstream 110 onto transmission medium 104. The bitstream 110 may be sent (e.g., transmitted) to destination device 106. In addition or alternatively, output interface 116 may be configured to send (e.g., transmit), upload, and/or stream bitstream 110 to destination device 106 via transmission medium 104. Output interface 116 may comprise a wired and/or wireless transmitter configured to send (e.g., transmit), upload, and/or stream bitstream 110 according to one or more proprietary, open-source, and/or standardized communication protocols. The one or more proprietary, open-source, and/or standardized communication protocols may include, for example, Digital Video Broadcasting (DVB) standards, Advanced Television Systems Committee (ATSC) standards, Integrated Services Digital Broadcasting (ISDB) standards, Data Over Cable Service Interface Specification (DOCSIS) standards, 3rd Generation Partnership Project (3GPP) standards, Institute of Electrical and Electronics Engineers (IEEE) standards, Internet Protocol (IP) standards, Wireless Application Protocol (WAP) standards, and/or any other communication protocol.

Transmission medium 104 may comprise a wireless, wired, and/or computer readable medium. For example, transmission medium 104 may comprise one or more wires, cables, air interfaces, optical discs, flash memory, and/or magnetic memory. In addition or alternatively, transmission medium 104 may comprise one or more networks (e.g., the Internet) or file server(s) configured to store and/or send (e.g., transmit) encoded video data.

Destination device 106 may decode bitstream 110 into point cloud sequence 108 for display or other forms of consumption. Destination device 106 may comprise one or more of an input interface 118, a decoder 120, and/or a point cloud display 122. Input interface 118 may be configured to read bitstream 110 stored on transmission medium 104. Bitstream 110 may be stored on transmission medium 104 by source device 102. In addition or alternatively, input interface 118 may be configured to receive, download, and/or stream bitstream 110 from source device 102 via transmission medium 104. Input interface 118 may comprise a wired and/or wireless receiver configured to receive, download, and/or stream bitstream 110 according to one or more proprietary, open-source, standardized communication protocols, and/or any other communication protocol. Examples of the protocols include Digital Video Broadcasting (DVB) standards, Advanced Television Systems Committee (ATSC) standards, Integrated Services Digital Broadcasting (ISDB) standards, Data Over Cable Service Interface Specification (DOCSIS) standards, 3rd Generation Partnership Project (3GPP) standards, Institute of Electrical and Electronics Engineers (IEEE) standards, Internet Protocol (IP) standards, and Wireless Application Protocol (WAP) standards.

Decoder 120 may decode point cloud sequence 108 from encoded bitstream 110. For example, decoder 120 may operate in a same or similar manner as a decoder provided by G-PCC reference software. Decoder 120 may decode a point cloud sequence that approximates a point cloud sequence 108. Decoder 120 may decode a point cloud sequence that approximates a point cloud sequence 108 due to, for example, lossy compression of the point cloud sequence 108 by encoder 114 and/or errors introduced into encoded bitstream 110, for example, if transmission to destination device 106 occurs.

Point cloud display 122 may display a point cloud sequence 108 to a user. The point cloud display 122 may comprise, for example, a cathode rate tube (CRT) display, a liquid crystal display (LCD), a plasma display, a light emitting diode (LED) display, a 3D display, a holographic display, a head-mounted display, or any other display device suitable for displaying point cloud sequence 108.

Point cloud coding (e.g., encoding/decoding) system 100 is presented by way of example and not limitation. Point cloud coding systems different from the point cloud coding system 100 and/or modified versions of the point cloud coding system 100 may perform the methods and processes as described herein. For example, the point cloud coding system 100 may comprise other components and/or arrangements. Point cloud source 112 may, for example, be external to source device 102. Point cloud display device 122 may, for example, be external to destination device 106 or omitted altogether (e.g., if point cloud sequence 108 is intended for consumption by a machine and/or storage device). Source device 102 may further comprise, for example, a point cloud decoder. Destination device 106 may comprise, for example, a point cloud encoder. For example, source device 102 may be configured to further receive an encoded bit stream from destination device 106. Receiving an encoded bit stream from destination device 106 may support two-way point cloud transmission between the devices.

As described herein, an encoder may quantize the positions of points in a point cloud according to a space precision, which may be the same or different in each dimension of the points. The quantization process may create a grid in 3D space. The encoder may map any points residing within each sub-grid volume to the sub-grid center coordinates, referred to as a voxel or a volumetric pixel. A voxel may be considered as a 3D extension of pixels corresponding to 2D image grid coordinates.

An encoder may represent or code a point cloud (e.g., a voxelized). An encoder may represent or code a point cloud, for example, using an occupancy tree. For example, the encoder may split the initial volume or cuboid containing the point cloud into sub-cuboids. The initial volume or cuboid may be referred to as a bounding box. A cuboid may be, for example, a cube. The encoder may recursively split each sub-cuboid that contains at least one point of the point cloud. The encoder may not further split sub-cuboids that do not contain at least one point of the point cloud. A sub-cuboid that contains at least one point of the point cloud may be referred to as an occupied sub-cuboid. A sub-cuboid that does not contain at least one point of the point cloud may be referred to as an unoccupied sub-cuboid. The encoder may split an occupied sub-cuboid into, for example, two sub-cuboids (to form a binary tree), four sub-cuboids (to form a quadtree), or eight sub-cuboids (to form an octree). The encoder may split an occupied sub-cuboid to obtain further sub-cuboids. The sub-cuboids may have the same size and shape at a given depth level of the occupancy tree. The sub-cuboids may have the same size and shape at a given depth level of the occupancy tree, for example, if the encoder splits the occupied sub-cuboid along a plane passing through the middle of edges of the sub-cuboid.

The initial volume or cuboid containing the point cloud may correspond to the root node of the occupancy tree. Each occupied sub-cuboid, split from the initial volume, may correspond to a node (of the root node) in a second level of the occupancy tree. Each occupied sub-cuboid, split from an occupied sub-cuboid in the second level, may correspond to a node (off the occupied sub-cuboid in the second level from which it was split) in a third level of the occupancy tree. The occupancy tree structure may continue to form in this manner for each recursive split iteration until, for example, some maximum depth level of the occupancy tree is reached or each occupied sub-cuboid has a volume corresponding to one voxel.

Each non-leaf node of the occupancy tree may comprise or be associated with an occupancy word representing the occupancy state of the cuboid corresponding to the node. For example, a node of the occupancy tree corresponding to a cuboid that is split into 8 sub-cuboids may comprise or be associated with a 1-byte occupancy word. Each bit (referred to as an occupancy bit) of the 1-byte occupancy word may represent or indicate the occupancy of a different one of the eight sub-cuboids. Occupied sub-cuboids may be each represented or indicated by a binary "1" in the 1-byte occupancy word. Unoccupied sub-cuboids may be each represented or indicated by a binary "0" in the 1-byte occupancy word. Occupied and un-occupied sub-cuboids may be represented or indicated by opposite 1-bit binary values (e.g., a binary "0" representing or indicating an occupied sub-cuboid and a binary "1" representing or indicating an unoccupied sub-cuboid) in the 1-byte occupancy word.

Each bit of an occupancy word may represent or indicate the occupancy of a different one of the eight sub-cuboids. Each bit of an occupancy word may represent or indicate the occupancy of a different one of the eight sub-cuboids, for example, following the so-called Morton order. For example, the least significant bit of an occupancy word may represent or indicate, for example, the occupancy of a first one of the eight sub-cuboids following the Morton order. The second least significant bit of an occupancy word may represent or indicate, for example, the occupancy of a second one of the eight sub-cuboids following the Morton order, etc.

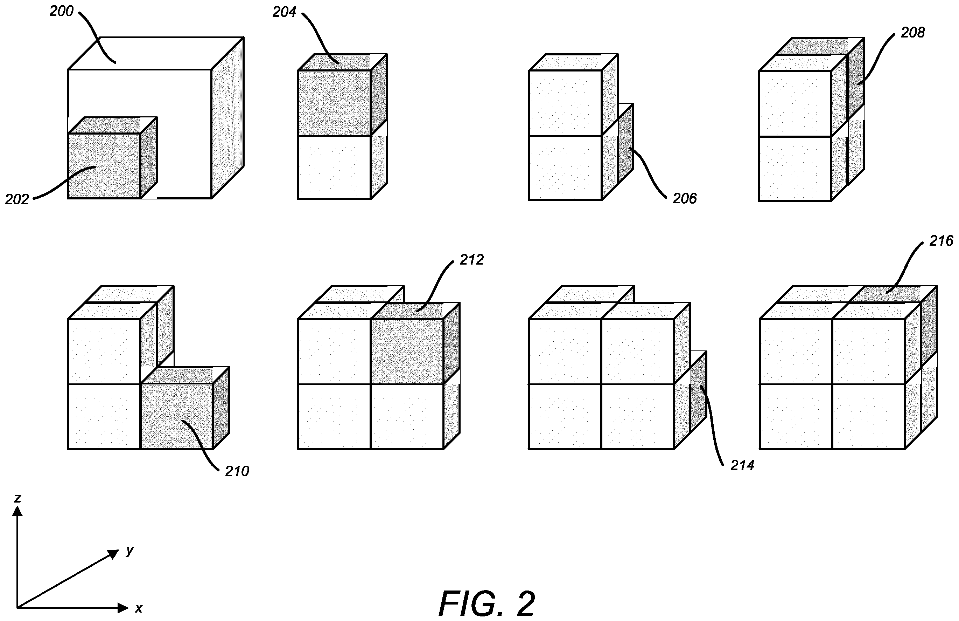

FIG. 2 shows an example Morton order. More specifically, FIG. 2 shows a Morton order of eight sub-cuboids 202-216 split from a cuboid 200. Sub-cuboids 202-216 may be labeled, for example, based on their Morton order, with child node 202 being the first in Morton order and child node 216 being the last in Morton order. The Morton order for sub-cuboids 202-216 may be a local lexicographic order in xyz.

The geometry of a point cloud may be represented by, and may be determined from, the initial volume and the occupancy words of the nodes in an occupancy tree. An encoder may send (e.g., transmit) the initial volume and the occupancy words of the nodes in the occupancy tree in a bitstream to a decoder for reconstructing the point cloud. The encoder may entropy encode the occupancy words. The encoder may entropy encode the occupancy words, for example, before sending (e.g., transmitting) the initial volume and the occupancy words of the nodes in the occupancy tree. The encoder may encode an occupancy bit of an occupancy word of a node corresponding to a cuboid. The encoder may encode an occupancy bit of an occupancy word of a node corresponding to a cuboid, for example, based on one or more occupancy bits of occupancy words of other nodes corresponding to cuboids that are adjacent or spatially close to the cuboid of the occupancy bit being encoded.

An encoder and/or a decoder may code (e.g., encode and/or decode) occupancy bits of occupancy words in sequence of a scan order. The scan order may also be referred to as a scanning order. For example, an encoder and/or a decoder may scan an occupancy tree in breadth-first order. All the occupancy words of the nodes of a given depth (e.g., level) within the occupancy tree may be scanned. All the occupancy words of the nodes of a given depth (e.g., level) within the occupancy tree may be scanned, for example, before scanning the occupancy words of the nodes of the next depth (e.g., level). Within a given depth, the encoder and/or decoder may scan the occupancy words of nodes in the Morton order. Within a given node, the encoder and/or decoder may scan the occupancy bits of the occupancy word of the node further in the Morton order.

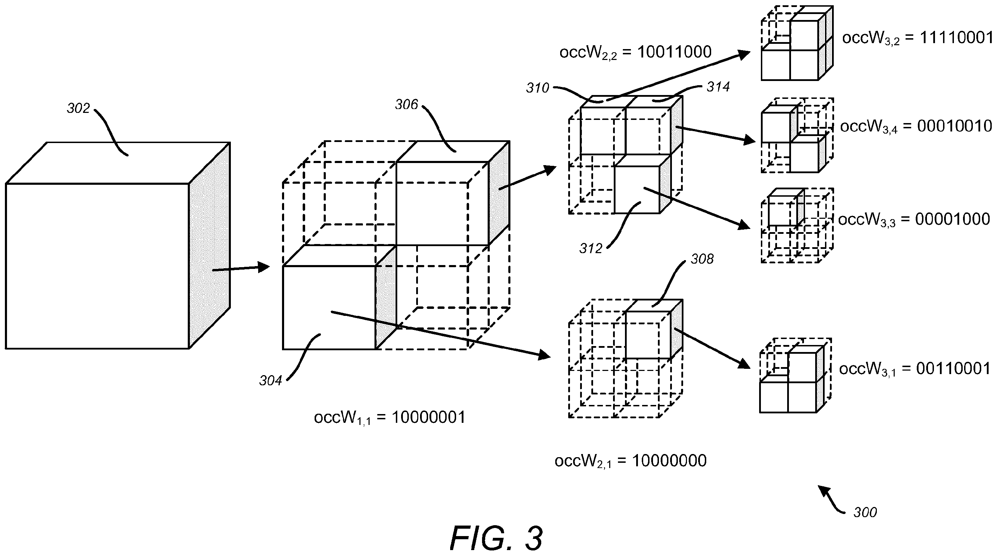

FIG. 3 shows an example scanning order. FIG. 3 shows an example scanning order (e.g., breadth-first order as described herein) for an occupancy tree 300. More specifically, FIG. 3 shows a scanning order for the first three example levels of an occupancy tree 300. In FIG. 3, a cuboid (e.g., cube) 302 corresponding to a root node of the occupancy tree 300 may be divided into eight sub-cuboids (e.g., sub-cubes). Two sub-cuboids 304 and 306 of the eight sub-cuboids may be occupied. The other six sub-cuboids of the eight sub-cuboids may be unoccupied. Following the Morton order, a first eight-bit occupancy word (e.g., $occW_{1,1}$) may be constructed to represent the occupancy word of the root node. An (e.g., each) occupancy bit of the first eight-bit occupancy word (e.g., $occW_{1,1}$) may represent or indicate the occupancy of a sub-cube of the eight sub-cuboids in the Morton order. For example, the least significant occupancy bit of the first eight-bit occupancy word $occW_{1,1}$ may represent or indicate the occupancy of the first sub-cuboid of the eight sub-cuboids in the Morton order. The second least significant occupancy bit of the first eight-bit occupancy word $occW_{1,1}$ may represent or indicate the occupancy of the second sub-cuboid of the eight sub-cuboids in the Morton order, etc.

Each of occupied sub-cuboids (e.g., two occupied sub-cuboids 304 and 306) may correspond to a node off the root node in a second level of an occupancy tree 300. The occupied sub-cuboids (e.g., two occupied sub-cuboids 304 and 306) may be each further split into eight sub-cuboids. For example, one of the sub-cuboids 308 of the eight sub-cuboids split from the sub-cube 304 may be occupied, and the other seven sub-cuboids may be unoccupied. Three of the sub-cuboids 310, 312, and 314 of the eight sub-cuboids split from the sub-cube 306 may be occupied, and the other five sub-cuboids of the eight sub-cuboids split from the sub-cube 306 may be unoccupied. Two second eight-bit occupancy words $occW_{2,1}$ and $occW_{2,2}$ may be constructed in this order to respectively represent the occupancy word of the node corresponding to the sub-cuboid 304 and the occupancy word of the node corresponding to the sub-cuboid 306.

Each of occupied sub-cuboids (e.g., four occupied sub-cuboids 308, 310, 312, and 314) may correspond to a node in a third level of an occupancy tree 300. The occupied sub-cuboids (e.g., four occupied sub-cuboids 308, 310, 312, and 314) may be each further split into eight sub-cuboids or 32 sub-cuboids in total. For example, four third level eight-bit occupancy words $occW_{3,1}$, $occW_{3,2}$, $occW_{3,3}$ and $occW_{3,4}$ may be constructed in this order to respectively represent the occupancy word of the node corresponding to the sub-cuboid 308, the occupancy word of the node corresponding to the sub-cuboid 310, the occupancy word of the node corresponding to the sub-cuboid 312, and the occupancy word of the node corresponding to the sub-cuboid 314.

Occupancy words of an example occupancy tree 300 may be entropy coded (e.g., entropy encoded by an encoder and/or entropy decoded by a decoder), for example, following the scanning order discussed herein (e.g., Morton order). The occupancy words of the example occupancy tree 300 may be entropy coded (e.g., entropy encoded by an encoder and/or entropy decoded by a decoder) as the succession of the seven occupancy words $occW_{1,1}$ to $occW_{3,4}$, for example, following the scanning order discussed herein. The scanning order discussed herein may be a breadth-first scanning order. The occupancy word(s) of all node(s) having the same depth (or level) as a current parent node may have already been entropy coded, for example, if the occupancy word of a current child node belonging to the current parent node is being entropy coded. For example, the occupancy word(s) of all node(s) having the same depth (e.g., level) as the current child node and having a lower Morton order than the current child node may have also already been entropy coded. Part of the already coded occupancy word(s) may be used to entropy code the occupancy word of the current child node. The already coded occupancy word(s) of neighboring parent and child node(s) may be used, for example, to entropy code the occupancy word of the current child node. The occupancy bit(s) of the occupancy word having a lower Morton order than a particular occupancy bit may have also already been entropy coded and may be used to code the occupancy bit of the occupancy word of the current child node, for example, if the particular occupancy bit of the occupancy word of the current child node is being coded (e.g., entropy coded).

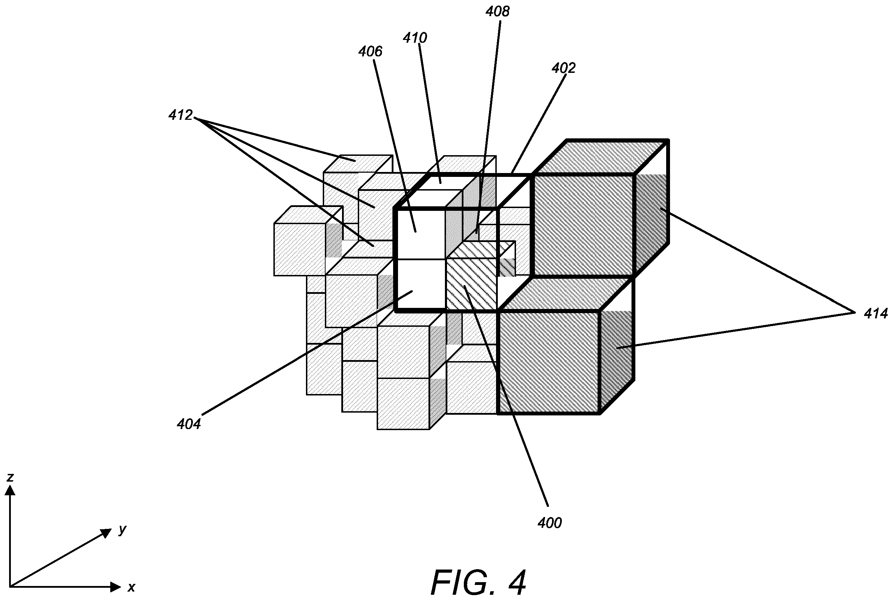

FIG. 4 shows an example neighborhood of cuboids for entropy coding the occupancy of a child cuboid. More specifically, FIG. 4 shows an example neighborhood of cuboids with already-coded occupancy bits. The neighborhood of cuboids with already-coded occupancy bits may be used to entropy code the occupancy bit of a current child cuboid 400.

The neighborhood of cuboids with already-coded occupancy bits may be determined, for example, based on the scanning order of an occupancy tree representing the geometry of the cuboids in FIG. 4 as discussed herein. The neighborhood of cuboids, of a current child cuboid, may include one or more of: a cuboid adj acent to the current child cuboid, a cuboid sharing a vertex with the current child cuboid, a cuboid sharing an edge with the current child cuboid, a cuboid sharing a face with the current child cuboid, a parent cuboid adjacent to the current child cuboid, a parent cuboid sharing a vertex with the current child cuboid, a parent cuboid sharing an edge with the current child cuboid, a parent cuboid sharing a face with the current child cuboid, a parent cuboid adj acent to the current parent cuboid, a parent cuboid sharing a vertex with the current parent cuboid, a parent cuboid sharing an edge with the current parent cuboid, a parent cuboid sharing a face with the current parent cuboid, etc. As shown in FIG. 4, current child cuboid 400 may belong to a current parent cuboid 402. Following the scanning order of the occupancy words and occupancy bits of nodes of the occupancy tree, the occupancy bits of four child cuboids 404, 406, 408, and 410, belonging to the same current parent cuboid 402, may have already been coded. The occupancy bit of child cuboids 412 of preceding parent cuboids may have already been coded. The occupancy bits of parent cuboids 414, for which the occupancy bits of child cuboids have not already been coded, may have already been coded. The already-coded occupancy bits of cuboids 404, 406, 408, 410, 412, and 414 may be used to code the occupancy bit of the current child cuboid 400.

The number (e.g., quantity) of possible occupancy configurations (e.g., sets of one or more occupancy words and/or occupancy bits) for a neighborhood of a current child cuboid may be $2^N$, where N is the number (e.g., quantity) of cuboids in the neighborhood of the current child cuboid with already-coded occupancy bits. The neighborhood of the current child cuboid may comprise several dozens of cuboids. The neighborhood of the current child cuboid (e.g., several dozens of cuboids) may comprise 26 adjacent parent cuboids sharing a face, an, edge, and/or a vertex with the parent cuboid of the current child cuboid and also several adjacent child cuboids having occupancy bits already coded sharing a face, an edge, or a vertex with the current child cuboid. The occupancy configuration for a neighborhood of the current child cuboid may have billions of possible occupancy configurations, even limited to a subset of the adjacent cuboids, making its direct use impractical. An encoder and/or decoder may use the occupancy configuration for a neighborhood of the current child cuboid to select the context (e.g., a probability model), among a set of contexts, of a binary entropy coder (e.g., binary arithmetic coder) that may code the occupancy bit of the current child cuboid. The context-based binary entropy coding may be similar to the Context Adaptive Binary Arithmetic Coder (CABAC) used in MPEG-H Part 2 (also known as High Efficiency Video Coding (HEVC)).

An encoder and/or a decoder may use several methods to reduce the occupancy configurations for a neighborhood of a current child cuboid being coded to a practical number (e.g., quantity) of reduced occupancy configurations. The $2^6$ or 64 occupancy configurations of the six adjacent parent cuboids sharing a face with the parent cuboid of the current child cuboid may be reduced to 9 occupancy configurations. The occupancy configurations may be reduced by using geometry invariance. An occupancy score for the current child cuboid may be obtained from the $2^{26}$ occupancy configurations of the 26 adjacent parent cuboids. The score may be further reduced into a ternary occupancy prediction (e.g., "predicted occupied," "unsure", or "predicted unoccupied") by using score thresholds. The number (e.g., quantity) of occupied adjacent child cuboids and the number (e.g., quantity) of unoccupied adjacent child cuboids may be used instead of the individual occupancies of these child cuboids.

An encoder and/or a decoder using/employing one or more of the methods described herein may reduce the number (e.g., quantity) of possible occupancy configurations for a neighborhood of a current child cuboid to a more manageable number (e.g., a few thousands). It has been observed that instead of associating a reduced number (e.g., quantity) of contexts (e.g., probability models) directly to the reduced occupancy configurations, another mechanism may be used, namely Optimal Binary Coders with Update on the Fly (OBUF). An encoder and/or a decoder may implement OBUF to limit the number (e.g., quantity) of contexts to a lower number (e.g., 32 contexts).

OBUF may use a limited number (e.g., 32) of contexts (e.g., probability models). The number (e.g., quantity) of contexts in OBUF may be a fixed number (e.g., fixed quantity). The contexts used by OBUF may be ordered, referred to by a context index (e.g., a context index in the range of 0 to 31), and associated from a lowest virtual probability to a highest virtual probability to code a "1". A Look-Up Table (LUT) of context indices may be initialized at the beginning of a point cloud coding process. For example, the LUT may initially point to a context (e.g., with a context index 15) with the median virtual probability to code a "1" for all input. The LUT may initially point to a context with the median virtual probability to code a "1", among the limited number (e.g., quantity) of contexts, for all input. This LUT may take an occupancy configuration for a neighborhood of current child cuboid as input and output the context index associated with the occupancy configuration. The LUT may have as many entries as reduced occupancy configurations (e.g., around a few thousand entries). The coding of the occupancy bit of a current child cuboid may comprise steps including determining the reduced occupancy configuration of the current child node, obtaining a context index by using the reduced occupancy configuration as an entry to the LUT, coding the occupancy bit of the current child cuboid by using the context pointed to (or indicated) by the context index, and updating the LUT entry corresponding to the reduced occupancy configuration, for example, based on the value of the coded occupancy bit of the current child cuboid. The LUT entry may be decreased to a lower context index value, for example, if a binary "0" (e.g., indicating the current child cuboid is unoccupied) is coded. The LUT entry may be increased to a higher context index value, for example, if a binary "1" (e.g., indicating the current child cuboid is occupied) is coded. The update process of the context index may be, for example, based on a theoretical model of optimal distribution for virtual probabilities associated with the limited number (e.g., quantity) of contexts. This virtual probability may be fixed by a model and may be different from the internal probability of the context that may evolve, for example, if the coding of bits of data occurs. The evolution of the internal context may follow a well-known process similar to the process in CABAC.

An encoder and/or a decoder may implement a "dynamic OBUF" scheme. The "dynamic OBUF" scheme may enable an encoder and/or a decoder to handle a much larger number (e.g., quantity) of occupancy configurations for a neighborhood of a current child cuboid, for example, than general OBUF. The use of a larger number (e.g., quantity) of occupancy configurations for a neighborhood of a current child cuboid may lead to improved compression capabilities, and may maintain complexity within reasonable bounds. By using an occupancy tree compressed by OBUF, an encoder and/or a decoder may reach a lossless compression performance as good as 1 bit per point (bpp) for coding the geometry of dense point clouds. An encoder and/or a decoder may implement dynamic OBUF to potentially further reduce the bit rate by more than 25% to 0.7 bpp.

OBUF may not take as input a large variety of reduced occupancy configurations for a neighborhood of a current child cuboid, and may potentially cause a loss of useful correlation. With OBUF, the size of the LUT of context indices may be increased to handle more various occupancy configurations for a neighborhood of a current child cuboid as input. Due to such increase, statistics may be diluted, and compression performance may be worsened. For example, if the LUT has millions of entries and the point cloud has a hundred thousand points, then most of the entries may be never visited (e.g., looked up, accessed, etc.). Many entries may be visited only a few times and their associated context index may not be updated enough times to reflect any meaningful correlation between the occupancy configuration value and the probability of occupancy of the current child cuboid. Dynamic OBUF may be implemented to mitigate the dilution of statistics due to the increase of the number (e.g., quantity) of occupancy configurations for a neighborhood of a current child cuboid. This mitigation may be performed by a "dynamic reduction" of occupancy configurations in dynamic OBUF.

Dynamic OBUF may add an extra step of reduction of occupancy configurations for a neighborhood of a current child cuboid, for example, before using the LUT of context indices. This step may be called a dynamic reduction because it evolves, for example, based on the progress of the coding of the point cloud or, more precisely, based on already visited (e.g., looked up in the LUT) occupancy configurations.

As discussed herein, many possible occupancy configurations for a neighborhood of a current child cuboid may be potentially involved but only a subset may be visited if the coding of a point cloud occurs. This subset may characterize the type of the point cloud. For example, most of the visited occupancy configurations may exhibit occupied adjacent cuboids of a current child cuboid, for example, if AR or VR dense point clouds are being coded. On the other hand, most of the visited occupancy configurations may exhibit only a few occupied adjacent cuboids of a current child cuboid, for example, if sensor-acquired sparse point clouds are being coded. The role of the dynamic reduction may be to obtain a more precise correlation, for example, based on the most visited occupancy configuration while putting aside (e.g., reducing aggressively) other occupancy configurations that are much less visited. The dynamic reduction may be updated on-the-fly. The dynamic reduction may be updated on-the-fly, for example, after each visit (e.g., a lookup in the LUT) of an occupancy configuration, for example, if the coding of occupancy data occurs.

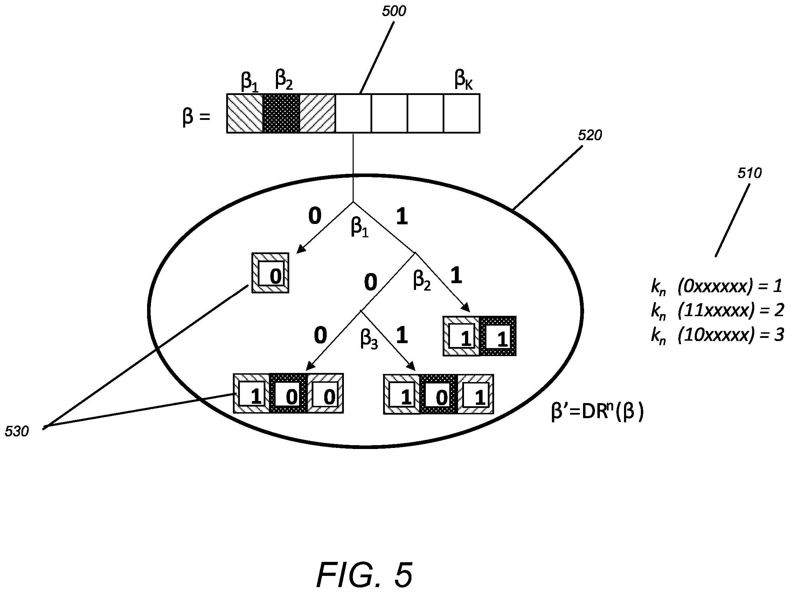

FIG. 5 shows an example of a dynamic reduction function DR that may be used in dynamic OBUF. The dynamic reduction function DR may be obtained by masking bits $\beta_j$ of occupancy configurations 500

$$\beta = \beta_1 \ldots \beta_K$$

made of K bits. The size of the mask may decrease, for example, if occupancy configurations are visited (e.g., looked up in the LUT) a certain number (e.g., quantity) of times. The initial dynamic reduction function $DR^0$ may mask all bits for all occupancy configurations such that it is a constant function $DR^0(\beta) = 0$ for all occupancy configurations $\beta$. The dynamic reduction function may evolve from a function $DR^n$ to an updated function $DR^{n+1}$. The dynamic reduction function may evolve from a function $DR^n$ to an updated function $DR^{n+1}$, for example, after each coding of an occupancy bit. The function may be defined by

$$\beta' = DR^n(\beta) = \beta_1 \ldots \beta_{k_n(\beta)}$$

where $k_n(\beta)$ 510 is the number (e.g., quantity) of non-masked bits. The initialization of $DR^0$ may correspond to $k_0(\beta)=0$, and the natural evolution of the reduction function toward finer statistics may lead to an increasing number (e.g., quantity) of non-masked bits $k_n(\beta) \leq k_{n+1}(\beta)$. The dynamic reduction function may be entirely determined by the values of $k_n$ for all occupancy configurations $\beta$.

The visits (e.g., instances of a lookup in the LUT) to occupancy configurations may be tracked by a variable NV(P') for all dynamically reduced occupancy configurations $\beta'= DR^n(\beta)$. The corresponding number (e.g., quantity) of

visits $NV(\beta^{V'})$ may be increased by one, for example, after each instance of coding of an occupancy bit based on an occupancy configuration $\beta^V$. If this number (e.g., quantity) of visits $NV(\beta^{V'})$ is greater than a threshold thv,

$$NV(\beta^{V'}) > th_V$$

then the number (e.g., quantity) of unmasked bits $k_n(\beta)$ may be increased by one for all occupancy configurations $\beta$ being dynamically reduced to $\beta^{V'}$. This corresponds to replacing the dynamically reduced occupancy configuration $\beta^{V'}$ by the two new dynamically reduced occupancy configurations $\beta^{0'}$ and $\beta^{1'}$ defined by

$$\beta^{0'} = \beta^{V'}0 = \beta^V_1 \dots \beta^V_{kn(\beta)}0 \text{ and } \beta^{1'} = \beta^{V'}1 = \beta^V_1 \dots \beta^V_{kn(\beta)}1$$

In other words, the number (e.g., quantity) of unmasked bits has been increased by one $k_{n+1}(\beta) = k_n(\beta) + 1$ for all occupancy configurations $\beta$ such that $DR^n(\beta) = \beta^{V'}$. The number (e.g., quantity) of visits of the two new dynamically reduced occupancy configurations may be initialized to zero

$$NV(\beta^{0'}) = NV(\beta^{1'}) = 0. \qquad (I)$$

At the start of the coding, the initial number (e.g., quantity) of visits for the initial dynamic reduction function $DR^0$ may be set to

$$NV(DR^0(\beta)) = NV(0) = 0,$$

and the evolution of NV on dynamically reduced occupancy configurations may be entirely defined.

The corresponding LUT entry $LUT[\beta^{V'}]$ may be replaced by the two new entries $LUT[\beta^{0'}]$ and $LUT[\beta^{1'}]$ that are initialized by the coder index associated with $\beta^{V'}$. The corresponding LUT entry $LUT[\beta^{V'}]$ may be replaced by the two new entries $LUT[\beta^{0'}]$ and $LUT[\beta^{1'}]$ that are initialized by the coder index associated with $\beta^{V'}$, for example, if a dynamically reduced occupancy configuration $\beta^{V'}$ is replaced by the two new dynamically reduced occupancy configurations $\beta^{0'}$ and $\beta^{1'}$,

$$LUT[\beta^{0'}] = LUT[\beta^{1'}] = LUT[\beta^{V'}], \qquad (II)$$

and then evolve separately. The evolution of the LUT of coder indices on dynamically reduced occupancy configurations may be entirely defined.

The reduction function $DR^n$ may be modeled by a series of growing binary trees $T^n$ 520 whose leaf nodes 530 are the reduced occupancy configurations $\beta' = DR^n(\beta)$. The initial tree may be the single root node associated with $0 = DR^\circ(P)$. The replacement of the dynamically reduced to $\beta^{V'}$ by $\beta^{0'}$ and $\beta^{1'}$ may correspond to growing the tree $T^n$ from the leaf node associated with $\beta^{V'}$, for example, by attaching to it two new nodes associated with $\beta^{0'}$ and $\beta^{1'}$. The tree $T^{n+1}$ may be obtained by this growth. The number (e.g., quantity) of visits NV and the LUT of context indices may be defined on the leaf nodes and evolve with the growth of the tree through equations (I) and (II).

The practical implementation of dynamic OBUF may be made by the storage of the array $NV[P']$ and the $LUT[\beta']$ of context indices, as well as the trees $T^n$ 520. An alternative to the storage of the trees may be to store the array $k_n[\beta]$ 510 of the number (e.g., quantity) of non-masked bits.

A limitation for implementing dynamic OBUF may be its memory footprint. In some applications, a few million occupancy configurations may be practically handled, leading to about 20 bits $\beta_i$ constituting an entry configuration $\beta$ to the reduction function DR. Each bit $\beta_i$ may correspond to the occupancy status of a neighboring cuboid of a current child cuboid or a set of neighboring cuboids of a current child cuboid.

Higher (e.g., more significant) bits $\beta_i$ (e.g., $\beta_0$, $\beta_1$, etc.) may be the first bits to be unmasked. Higher (e.g., more significant) bits $\beta_i$ (e.g., $\beta_0$, $\beta_1$, etc.) may be the first bits to be unmasked, for example, during the evolution of the dynamic reduction function DR. The order of neighbor-based information put in the bits $\beta_i$ may impact the compression performance. Neighboring information may be ordered from higher (e.g., highest) priority to lower priority and put in this order into the bits $\beta_i$, from higher to lower weight. The priority may be, from the most important to the least important, occupancy of sets of adjacent neighboring child cuboids, then occupancy of adjacent neighboring child cuboids, then occupancy of adjacent neighboring parent cuboids, then occupancy of non-adj acent neighboring child nodes, and finally occupancy of non-adj acent neighboring parent nodes. Adj acent nodes sharing a face with the current child node may also have higher priority than adjacent nodes sharing an edge (but not sharing a face) with the current child node. Adjacent nodes sharing an edge with the current child node may have higher priority than adjacent nodes sharing only a vertex with the current child node.

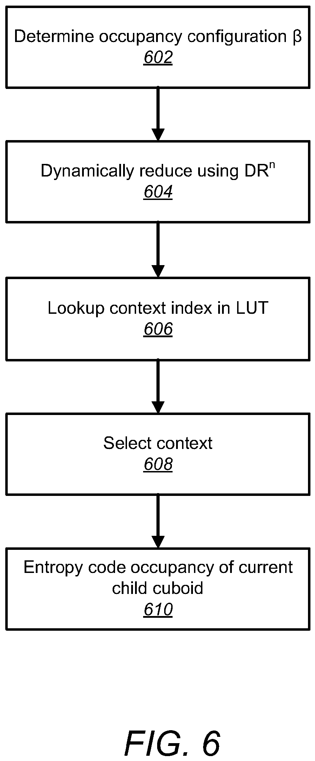

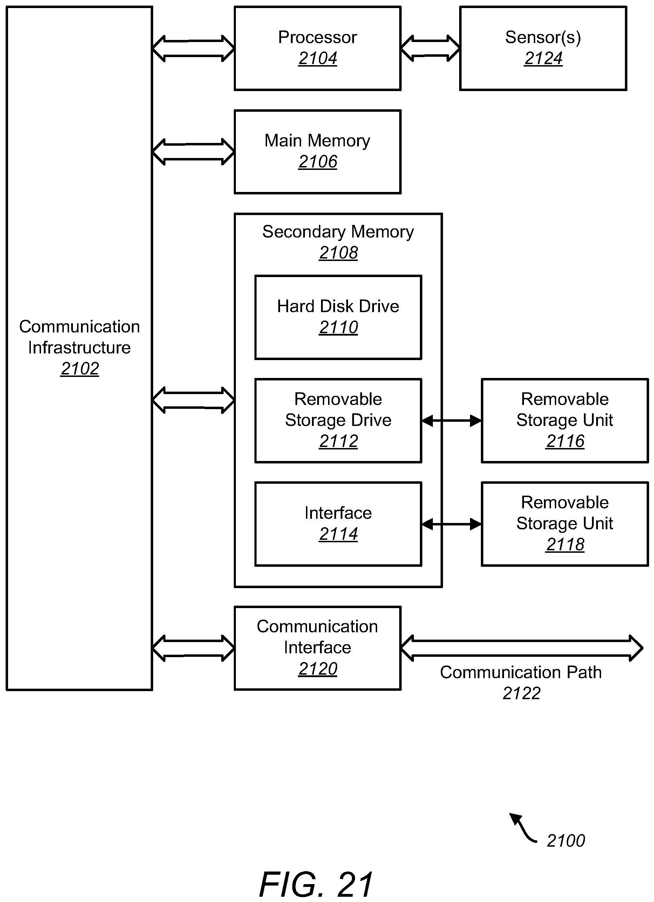

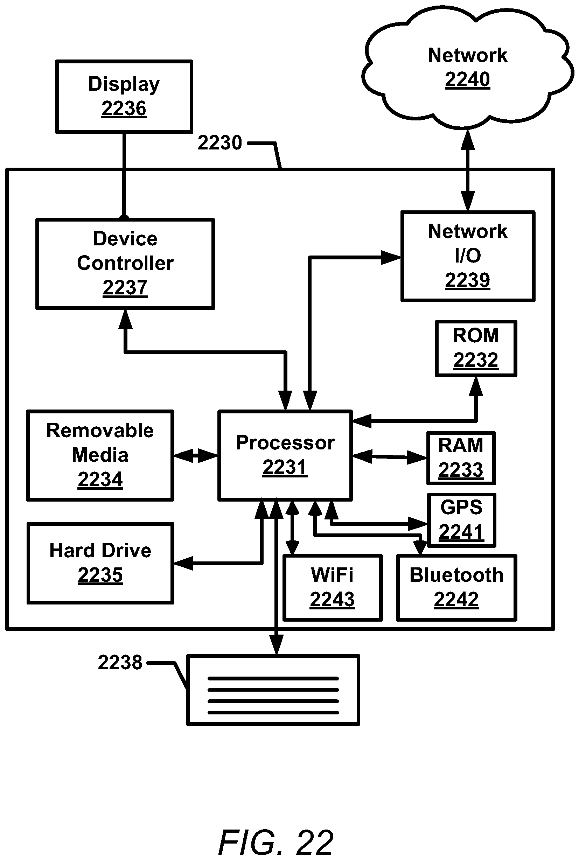

FIG. 6 shows an example method for coding occupancy of a cuboid using dynamic OBUF. More specifically, FIG. 6 shows an example method for coding occupancy bit of a current child cuboid using dynamic OBUF. One or more steps of FIG. 6 may be performed by an encoder and/or a decoder (e.g., the encoder 114 and/or decoder 120 in FIG. 1). All or portions of the flowchart may be implemented by a coder (e.g., the encoder 114 and/or decoder 120 in FIG. 1), an example computer system 2100 in FIG. 21, and/or an example computing device 2230 in FIG. 22.

At step 602, an occupancy configuration (e.g., occupancy configuration $\beta$) of the current child cuboid may be determined. The occupancy configuration (e.g., occupancy configuration $\beta$) of the current child cuboid may be determined, for example, based on occupancy bits of already-coded cuboids in a neighborhood of the current child cuboid. At step 604, the occupancy configuration (e.g., occupancy configuration $\beta$) may be dynamically reduced. The occupancy configuration may be dynamically reduced, for example, using a dynamic reduction function $DR^n$. For example, the occupancy configuration $\beta$ may be dynamically reduced into a reduced occupancy configuration $\beta' = DR^n(\beta)$. At step 606, context index may be looked up, for example, in a look-up table (LUT). For example, the encoder and/or decoder may look up context index LUT[P'] in the LUT of the dynamic OBUF. At step 608, context (e.g., probability model) may be selected. For example, the context (e.g., probability model) pointed to by the context index may be selected. At step 610, occupancy of the current child cuboid may be entropy coded. For example, the occupancy bit of the current child cuboid may be entropy coded (e.g., arithmetic coded), for example, based on the context. The occupancy bit of the current child cuboid may be coded based on the occupancy bits of the already-coded cuboids neighboring the current child cuboid.

Although not shown in FIG. 6, the encoder and/or decoder may update the reduction function and/or update the context index. For example, the encoder and/or decoder may update the reduction function $DR^n$ into $DR^{n+1}$ and/or update the context index LUT[P'], for example, based on the occupancy bit of the current child cuboid. The method of FIG. 6 may be repeated for additional or all child cuboids of parent cuboids corresponding to nodes of the occupancy tree in a scan order, such as the scan order discussed herein with respect to FIG. 3.

In general, the occupancy tree is a lossless compression technique. The occupancy tree may be adapted to provide lossy compression, for example, by modifying the point cloud on the encoder side (e.g., down-sampling, removing points, moving points, etc.). The performance of the lossy compression may be weak. The lossy compression may be a useful lossless compression technique for dense point clouds.

One approach to lossy compression for point cloud geometry may be to set the maximum depth of the occupancy tree to not reach the smallest volume size of one voxel but instead to stop at a bigger volume size (e.g., NxNxN cuboids (e.g., cubes), where N > 1). The geometry of the points belonging to each occupied leaf node associated with the bigger volumes may then be modeled. This approach may be particularly suited for dense and smooth point clouds that may be locally modeled by smooth functions such as planes or polynomials. The coding cost may become the cost of the occupancy tree plus the cost of the local model in each of the occupied leaf nodes.

A scheme for modeling the geometry of the points belonging to each occupied leaf node associated with a volume size larger than one voxel may use sets of triangles as local models. The scheme may be referred to as the "TriSoup" scheme. TriSoup is short for "Triangle Soup" because the connectivity between triangles may not be part of the models. An occupied leaf node of an occupancy tree that corresponds to a cuboid with a volume greater than one voxel may be referred to as a TriSoup node. An edge belonging to at least one cuboid corresponding to a TriSoup node may be referred to as a TriSoup edge. A TriSoup node may comprise a presence flag ($s_k$) for each TriSoup edge of its corresponding occupied cuboid. A presence flag ($s_k$) of a TriSoup edge may indicate whether a TriSoup vertex ($V_k$) is present or not on the TriSoup edge. At most one TriSoup vertex ($V_k$) may be present on a TriSoup edge. For each vertex ($V_k$) present on a TriSoup edge of an occupied cuboid, the TriSoup node corresponding to the occupied cuboid may comprise a position ($p_k$) of the vertex ($V_k$) along the TriSoup edge.

In addition to the occupancy words of an occupancy tree, an encoder may entropy encode, for each TriSoup node of the occupancy tree, the TriSoup vertex presence flags and positions of each TriSoup edge belonging to TriSoup nodes of the occupancy tree. A decoder may similarly entropy decode the TriSoup vertex presence flags and positions of each TriSoup edge and vertex along a respective TriSoup edge belonging to a TriSoup node of the occupancy tree, in addition to the occupancy words of the occupancy tree.

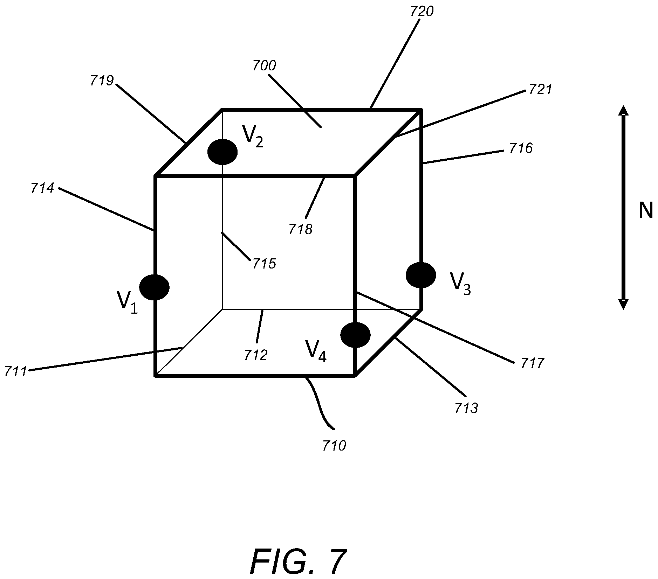

FIG. 7 shows an example of an occupied cuboid (e.g., cube) 700. More specifically, FIG. 7 shows an example of an occupied cuboid (e.g., cube) 700 of size NxNxN (where N > 1) that corresponds to a TriSoup node of an occupancy tree. An occupied cuboid 700 may comprise edges (e.g., TriSoup edges 710 - 721). The TriSoup node, corresponding to the occupied cuboid 700, may comprise a presence flag ($s_k$) for each edge (e.g., each TriSoup edge of the TriSoup edges 710-721). For example, the presence flag of a TriSoup edge 714 may indicate that a TriSoup vertex $V_1$ is present on the TriSoup edge 714. The presence flag of a TriSoup edge 715 may indicate that a TriSoup vertex $V_2$ is present on the TriSoup edge 715. The presence flag of a TriSoup edge 716 may indicate that a TriSoup vertex $V_3$ is present on the TriSoup edge 716. The presence flag of a TriSoup edge 717 may indicate that a TriSoup vertex $V_4$ is present on the TriSoup edge 717. The presence flags of the remaining TriSoup edges each may indicate that a TriSoup vertex is not present on their corresponding TriSoup edge. The TriSoup node, corresponding to the occupied cuboid 700, may comprise a position for each TriSoup vertex present along one of its TriSoup edges 710-721. More specifically, the TriSoup node, corresponding to the occupied cuboid 700, may comprise a position $p_1$ for TriSoup vertex $V_1$, a position $p_2$ for TriSoup vertex $V_2$, a position $p_3$ for TriSoup vertex $V_3$, and a position $p_4$ for TriSoup vertex $V_4$. The TriSoup vertices may be shared among TriSoup nodes along common TriSoup edge(s).

A presence flag ($s_k$) and, if the presence flag ($s_k$) may indicate the presence of a vertex, a position ($p_k$) of a current TriSoup edge may be entropy coded. The presence flag ($s_k$) and position ($p_k$) may be individually or collectively referred to as vertex information or TriSoup vertex information. A presence flag ($s_k$) and, if the presence flag ($s_k$) indicates the presence of a vertex, a position ($p_k$) of a current TriSoup edge may be entropy coded, for example, based on already-coded presence flags and positions, of present TriSoup vertices, of TriSoup edges that neighbor the current TriSoup edge. A presence flag ($s_k$) and, if the presence flag ($s_k$) may indicate the presence of a vertex, a position ($p_k$) of a current TriSoup edge (e.g., indicating a position of the vertex the edge is along) may be additionally or alternatively entropy coded. The presence flag ($s_k$) and the position ($p_k$) of a current TriSoup edge may be additionally or alternatively entropy coded, for example, based on occupancies of cuboids that neighbor the current TriSoup edge. Similar to the entropy coding of the occupancy bits of the occupancy tree, a configuration $\beta_{TS}$ for a neighborhood (also referred to as a neighborhood configuration $\beta_{TS}$) of a current TriSoup edge may be obtained and dynamically reduced into a reduced configuration $\beta_{TS}' = DR^n(\beta_{TS})$, for example, by using a dynamic OBUF scheme for TriSoup. A context index LUT[$\beta_{TS}'$] may be obtained from the OBUF LUT. At least a part of the vertex information of the current TriSoup edge may be entropy coded using the context (e.g., probability model) pointed to by the context index.

The TriSoup vertex position ($p_k$) (if present) along its TriSoup edge may be binarized. The TriSoup vertex position ($p_k$) (if present) along its TriSoup edge may be binarized, for example, to use a binary entropy coder to entropy code at least part of the vertex information of the current TriSoup edge. A number (e.g., quantity) of bits $N_b$ may be set for the quantization of the TriSoup vertex position ($p_k$) along the TriSoup edge of length N. The TriSoup edge of length N may be uniformly divided into $2^{Nb}$ quantization intervals. By doing so, the TriSoup vertex position ($p_k$) may be represented by $N_b$ bits ($p_k^j$, j=1, ..., $N_b$) that may be individually coded by the dynamic OBUF scheme as well as the bit corresponding to the presence flag ($s_k$). The neighborhood configuration $\beta_{TS}$, the OBUF reduction function $DR^n$, and the context index may depend on the nature, characteristic, and/or property of the coded bit (e.g., a presence flag ($s_k$), a highest position bit ($p_{k1}$), a second highest position bit ($p_{k2}$), etc.) of the coded bit (e.g., presence flag ($s_k$), highest position bit ($p_k^1$), second highest position bit ($p_k^2$), etc.). There may practically be several dynamic OBUF schemes, each dedicated to a specific bit of information (e.g., presence flag ($s_k$) or position bit ($p_k^j$)) of the vertex information.

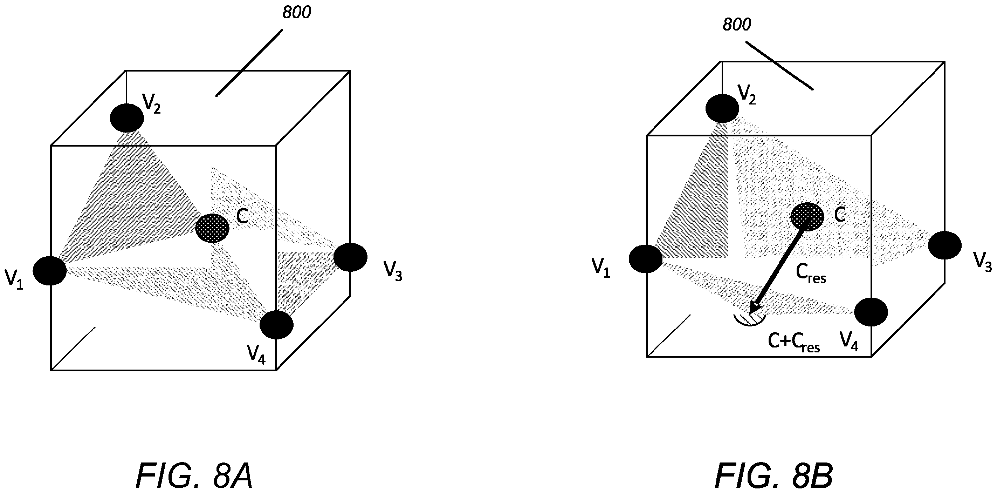

FIG. 8A shows an example cuboid 800 (e.g., a cube) corresponding to a TriSoup node. A cuboid 800 may correspond to a TriSoup node with a number K of TriSoup vertices $V_k$. Within cuboid 800, TriSoup triangles may be constructed from the TriSoup vertices $V_k$. TriSoup triangles may be constructed from the TriSoup vertices $V_k$, for example, if at least three (K≥3) TriSoup vertices are present on the TriSoup edges of cuboid 800. For example, with respect to FIG. 8A, four TriSoup vertices may be present and TriSoup triangles may be constructed. The TriSoup triangles may be constructed around the centroid vertex C defined as the mean of the TriSoup vertices $V_k$. A dominant direction may be determined, then vertices $V_k$ may be ordered by turning around this direction, and the following K TriSoup triangles (listed as triples of vertices) may be constructed: $V_1V_2C$, $V_2V_3C$, ..., $V_KV_1C$. The dominant direction may be chosen among the three directions respectively parallel to the axes of the 3D space to increase or maximize the 2D surface of the triangles, for example, if the triangles are projected along the dominant direction. By doing so, the dominant direction may be somewhat perpendicular to a local surface defined by the points of the point cloud belonging to the TriSoup node.

FIG. 8B shows an example refinement to the TriSoup model. The TriSoup model may be refined by coding a centroid residual value. A centroid residual value $C_{res}$ may be coded into the bitstream. A centroid residual value $C_{res}$ may be coded into the bitstream, for example, to use $C+C_{res}$ instead of C as a pivoting vertex for the triangles. By using $C+C_{res}$ as the pivoting vertex for the triangles, the vertex $C+C_{res}$ may be closer to the points of the point cloud than the centroid C, the reconstruction error may be lowered, leading to lower distortion at the cost of a small increase in bitrate needed for coding $C_{res}$.

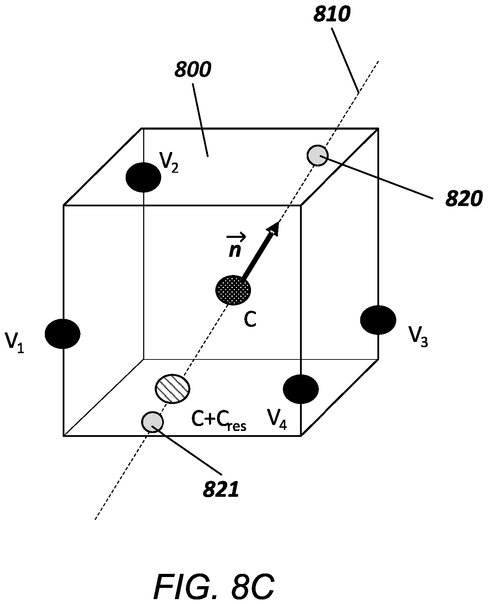

FIG. 8C shows an example of coding a centroid residual. More specifically, FIG. 8C shows an example of coding a centroid residual vector $C_{res}$ in/from the bitstream such that an adjusted centroid $C+C_{res}$ may be used instead of centroid C for generating TriSoup triangles of a cuboid 800 (corresponding to a TriSoup node) corresponding to a portion of a point cloud. For example, the triangles may be generated based on adjusted centroid $C+C_{res}$ and adjacent pairs of vertices of an ordering of the vertices $V_1$-$V_4$, determined as described above with respect to FIG. 8A. The TriSoup triangles of the cuboid, as described herein, may be voxelized at the decoder to generate voxels representing (or modeling) the portion, of the point cloud, corresponding to the cuboid. A unit vector $\vec{n}$ (i.e., also referred to as a normalized vector) may be determined as a normalized mean vector of normal vectors to the triangles ($V_1V_2C$, $V_2V_3C$, ..., $V_KV_1C$) constructed by centroid C and pairs of the vertices of the cuboid by pivoting around the centroid C (e.g., as described in FIG. 8A). The unit vector $\vec{n}$ may be determined as the normalized vector, for example, based on a mean of cross-products representing areas of the triangles $(\overrightarrow{V_1C} \times \overrightarrow{V_2C} + \overrightarrow{V_2C} \times \overrightarrow{V_3C} + \cdots + \overrightarrow{V_KC} \times \overrightarrow{V_1C})/K$. The unit vector $\vec{n}$ may be determined by dividing the mean vector (n) by the norm (or length) of the mean vector (i.e., $\vec{n} = n / ||n||$).

A value resulting from each cross product may be equal to an area of a parallelogram formed by the two vectors in the cross product. The value may be representative of an area of a triangle formed by the two vectors because the area of the triangle is equal to half of the value. The vector it may be indicative of the direction normal to a local surface representative of the portion of the point cloud. The vector it may be indicative of the direction normal to a local surface representative of the portion of the point cloud, for example, since the vector it indicates a direction of the triangles (e.g., TriSoup triangles) representing (e.g., modeling) the portion of the point cloud. A one-component residual $\alpha_{res}$ along the line (C, it) 810 may be coded, instead of a 3D residual vector, to maximize the effect of the centroid residual while minimizing its coding cost.

$$C_{res} = \alpha_{res}\vec{n}$$

The residual value $\alpha_{res}$ may be determined by the encoder as the intersection between the current point cloud and the line $(C, \vec{n})$, which is along the same direction of the normalized vector $\vec{n}$. For example, a set of points, of the portion of the point cloud, closest (e.g., within a threshold distance, a threshold number of points) to the line may be determined. The set of points may be projected on the line and the residual value $\alpha_{res}$ may be determined as the mean component along the line of the projected points. The mean may be determined as a weighted mean whose weights depend on the distance of the set of points from the line. For example, a point from the set closer to the line may have a higher weight than another point from the set farther from the line.

The residual value $\alpha_{res}$ may be quantized. For example, it may be quantized by a uniform quantization function having quantization step similar to the quantization precision of the TriSoup vertices $V_k$. The quantization error may be maintained to be uniform over all vertices $V_k$ and $C+C_{res}$ such that the local surface is uniformly approximated.

The residual value $\alpha_{res}$ may be binarized and entropy coded into the bitstream, for example, by using a unary-based coding scheme. The residual value $\alpha_{res}$ may be coded using a set of flags. A flag $f_0$ may be coded to indicate if the residual value $\alpha_{res}$ is equal to zero. No further syntax elements may be needed. No further syntax elements may be needed, for example, if the flag $f_0$ indicates the residual value $\alpha_{res}$ is zero. A sign bit indicating a sign may be coded and the residual magnitude $|\alpha_{res}|$-1 may be coded using an entropy code. A sign bit indicating a sign may be coded and the residual magnitude $|\alpha_{res}|$-1 may be coded using an entropy code, for example, if the flag $f_0$ indicates the residual value $\alpha_{res}$ is not zero. The residual magnitude may be coded using a unary coding scheme that codes successive flags f; (i≥1) indicating if the residual value magnitude $|\alpha_{res}|$ is equal to 'i'. A binary entropy coder may binarize the residual value $\alpha_{res}$ into the flags f; (i≥0) and entropy code the binarized residual value as well as the sign bit.

Compression of the residual value $\alpha_{res}$ may be improved by determining bounds as shown in FIG. 8C. The line (C, $\vec{n}$) 810, as shown, may intersect the current cuboid 800 (corresponding to a TriSoup node) at two bounding points 820 and 821, and the encoder may impose that the adjusted centroid vertex $C+C_{res}$ is located between the two bounding points 820 and 821. These bounding points 820 and 821 may also bound the residual value $\alpha_{res}$ (which may be quantized) as belonging to an integral interval [m, M], where m≤0≤M. Some bits of the binarized residual value $\alpha_{res}$ may be inferred. For example, the residual value $\alpha_{res}$ may equal to zero. The residual value $\alpha_{res}$ may equal to zero if m=M=0. The sign bit may be necessarily positive. The sign bit may be necessarily positive if m=0<M. Magnitude $|\alpha_{res}|$ may be determined to be bounded by either |m| or M such that the magnitude may be coded by a truncated unary coding scheme that may infer the value of the last of successive flags $f_i$ (i≥1). Magnitude $|\alpha_{res}|$ may be determined to be bounded by either |m| or M such that the magnitude may be coded by a truncated unary coding scheme that may infer the value of the last of successive flags $f_i$ (i≥1), for example, if the residual value $\alpha_{res}$ is not equal to zero and its sign is known.

The binary entropy coder used to code the binarized residual value $\alpha_{res}$ may be a context-adaptive binary arithmetic coder (CABAC) such that the probability model (also referred to as a context or an entropy coder) used to code at least one bit (e.g., f; or sign bit) of the binarized residual value $\alpha_{res}$ are updated depending on precedingly coded bits. The probability model of the binary entropy coder may be determined, for example, based on contextual information such as the values of the bounds m and M, the position of vertices $V_k$, or the size of the cuboid. The selection of the probability model (i.e., also referred equivalently as an entropy coder or context) may be performed by a dynamic OBUF scheme with the contextual information described herein as inputs.

The reconstruction of a decoded point cloud from the set of TriSoup triangles may be referred to as "voxelization" and may be performed, for example, by ray tracing or rasterization, for each triangle individually before duplicate voxels from the voxelized triangles are removed.

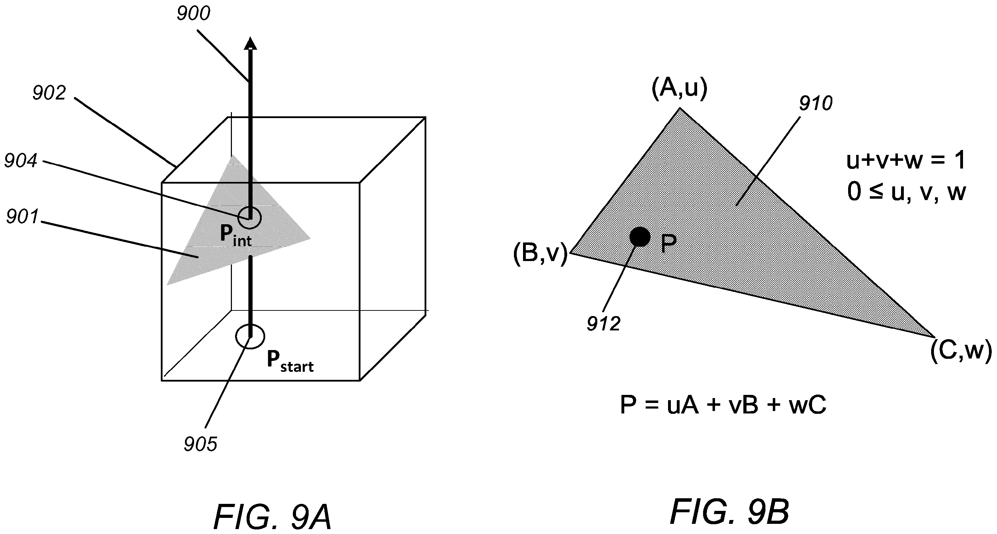

FIG. 9A shows an example of voxelization using ray tracing. For example, ray-triangle intersection algorithms, such as the Möller-Trumbore algorithm, may rely on launching rays to determine whether rays intersect with TriSoup triangles and, if so, where the rays intersect with the TriSoup triangles. Rays may be launched from integral coordinates that correspond to the centers of voxels. Rays such as ray 900, as shown by FIG. 9A, may be launched parallel to one of the three coordinate axes of the 3D space, starting from integral coordinates (sometimes referred to as integer coordinates) such as an origin point 905 (shown as origin or starting point $P_{start}$).

An intersection point 904 (shown as $P_{int}$), if any, between ray 900 and a TriSoup triangle 901 belonging to a cube 902, corresponding to a TriSoup node, may be rounded (e.g., quantized) to obtain a decoded point corresponding to a voxel. For example, a ray, launched parallel to a coordinate axis in 3D space, may intersect a TriSoup triangle if and only if the projection, along the ray direction, of the center of a voxel belongs to the TriSoup triangle. The ray may be determined to intersect the TriSoup triangle if the point of intersection corresponds to the center of the voxel. This intersection may be determined by using (e.g., applying) a ray-triangle intersection algorithm (e.g., tracing or ray casting technique) such as the Möller-Trumbore algorithm to generate voxels representing the triangle.

Ray tracing techniques such as the Möller-Trumbore algorithm may be, for example, based on generating, with respect to a triangle, barycentric coordinates of points of intersection between rays and a plane of the triangle. Points of the triangle may be determined from the barycentric coordinates.

FIG. 9B shows an example of voxelization using barycentric coordinates (u, v, w) of a point 912 (P) relative to a TriSoup triangle 910 having vertices labeled A, B, and C in the 3D space. Point 912 may be determined as an intersection between a ray and a plane of TriSoup triangle 910 (e.g., containing or passing through the three vertices A, B, and C of TriSoup triangle 910). For example, the ray may be launched parallel to one of the three coordinate axes in 3D space. This intersection point 912 may be uniquely represented as a sum of the three vertices of TriSoup triangle 910:

$$P = uA + vB + wC$$

under the condition $u + v + w = 1$. Any point P of the plane (containing TriSoup triangle 910) may have unique coordinates (u,v,w) in the barycentric coordinate system. A point with barycentric coordinates (u,v,w) may include an ordered triple of numbers u, v, and w. A point with barycentric coordinates (u,v,w) that sum to 1 (i.e., $u + v + w = 1$) may be known as homogeneous barycentric coordinates or normalized barycentric coordinates. The barycentric coordinates of the intersection point with respect to TriSoup triangle 910 may be determined using, for example, the well-known Möller-Trumbore algorithm.

The three vertices A, B, C of TriSoup triangle 910 may have respective barycentric coordinates A(1,0,0), B(0,1,0) and C(0,0,1), by converting points with Cartesian coordinates in 3D space to homogeneous barycentric coordinates. The convex hull (i.e., TriSoup triangle 910) of the three vertices A, B, and C may be equal to the set of all points such that the barycentric coordinates u, v, and w is each greater than or equal to zero:

$$0 \leq u, v, w$$

The intersection point may be determined to belong to TriSoup triangle 910, for example, based on the intersection point having barycentric coordinates with an ordered triple of values that is each greater than or equal to zero. The intersection point may be determined to not belong to TriSoup triangle. The intersection point may be determined to not belong to TriSoup triangle, for example, if at least one of barycentric coordinates (i.e., one of u, v, or w) is negative or less than 0. The intersection point may be determined to not belong to TriSoup triangle because the intersection point will be on the plane, but not on an edge or within the TriSoup triangle. A point determined to belong to TriSoup triangle 910 may be the ray intersecting TriSoup triangle 910 (e.g., within or at an edge of TriSoup triangle 910).

In at least some technologies, the geometry of the point cloud may be represented by a master space-partitioning of a volume encompassing the point cloud. The master space-partitioning of the volume may be obtained by splitting the volume into sub-volumes. For example, a master occupancy tree structure may be derived from the volume by recursively splitting the volume into sub-volumes. The master occupancy tree structure may comprise a root node associated with the volume and non-leaf nodes and leaf nodes associated with sub-volumes as discussed in relation with FIG. 1. A leaf node of the occupancy tree may be said occupied leaf node, for example, if the sub-volume associated with the leaf-node is occupied (i.e., it comprises at least one point of the point cloud).

A tree-based geometry representation model as discussed on FIG. 3 may represent the geometry of a sub-volume corresponding to an occupied leaf node. Information associated with a tree-based geometry representation model of a sub-volume may include a local space-partitioning of the sub-volume obtained by recursively splitting the sub-volume into local sub-volumes until, for example, a maximum depth level of the local space-partitioning is reached or until each occupied local sub-volume has a volume corresponding to one voxel. The local space-partitioning may be a space partitioning tree, for example, an occupancy tree, and may be a part of the master occupancy tree.

Information associated with a tree-based geometry representation model of a current sub-volume may be coded, for example, based on information associated with a tree-based geometry representation model of at least one neighboring sub-volume. For example, the at least one neighboring sub-volume may be adjacent or spatially close to the current sub-volume as shown on FIG. 4.

Information associated with a tree-based geometry representation model of a current sub-volume of the master occupancy tree may be entropy coded using OBUF or dynamic OBUF, for example, based on information associated with a tree-based model geometry representation model of at least one neighboring sub-volume of the master occupancy tree as discussed above in FIG. 3, 4, and 5. The occupancy bits of the occupancy word of an occupied leaf node of the master occupancy tree, such as information associated with a tree-based geometry representation model, of a current sub-volume of the master occupancy tree may be entropy coded, for example, based on occupancy bits of occupancy words of neighboring child or parent nodes, such as information associated with a tree-based geometry representation model, of a local occupancy tree of another occupied leaf node of the master occupancy tree that is adjacent to the current sub-volume.

The geometry of a sub-volume associated with an occupied leaf node may be alternatively represented by a triangle-based geometry representation model, for example, TriSoup-based geometry representation model.

Information associated with a TriSoup-based geometry representation model of a current sub-volume may be coded, for example, based on information associated with a TriSoup-based geometry representation model of at least one neighboring sub-volume. For example, the at least one neighboring sub-volume may be adjacent or spatially close to the current sub-volume as shown on FIG. 4.

Information associated with a TriSoup-based geometry representation model of a current sub-volume associated with an occupied leaf node of the master occupancy tree, for example, current TriSoup node, may be vertex information of each vertex along TriSoup edge of TriSoup triangle belonging to the current TriSoup node. Vertex information associated with a vertex of a TriSoup triangle of the current TriSoup node may be a presence flag on an edge of the TriSoup triangle and possibly a position of the vertex along an edge of the TriSoup triangle. The entropy coding of the vertex information may be based on vertex information of at least one vertex along at least one edge of at least one TriSoup triangle belonging to at least one TriSoup node adjacent of the current TriSoup node.

A geometry of a portion of the point cloud geometry contained in a current sub-volume of the master occupancy tree may be represented by a first type of geometry representation model, for example, a tree-based geometry representation model or a triangle-based geometry representation model. An information associated with the first type of geometry representation model of the current sub-volume may then be coded (encoded or decoded), for example, entropy coded, based on an information associated with the first type of geometry representation model to represent portion of the point cloud contained in at least one neighboring sub-volume of the current sub-volume.

The information associated with the first type of geometry representation model of the current sub-volume may be also coded, for example, based on an information associated with second type of geometry representation model to represent portion of the point cloud contained in at least one other neighboring sub-volume of the current sub-volume.

The first type may be different from the second type. For example the first type may be a tree-based geometry representation model and the second type may be a triangle-based geometry representation model or, inversely, the first type may be a triangle-based geometry representation model and the second type may be a tree-based geometry representation model.

In at least some Test Models (TM) under development at MPEG, for example the TMC13 and the GeS-TM, the coding of an information associated with a type of geometry representation model, for example, tree-based geometry representation model or TriSoup-based geometry representation model, of a current sub-volume may be performed based only on an information associated with same type of geometry representation model information.

The information associated with first type of geometry representation model information, for first and second type of geometry representation models represent portions of sub-volumes, may be coded, for example, based only on the information associated with first type geometry representation model. The coding may not be based on information associated with second type of geometry representation model of neighboring sub-volumes of the sub-volumes. Coding performance may be improved if the coding of an information associated with a first type of geometry representation model information of a current sub-volume can be performed based on information associated with a first type of geometry representation model of neighboring sub-volumes of the sub-volume and information associated with a second type of geometry representation model of neighboring sub-volumes of the sub-volume.

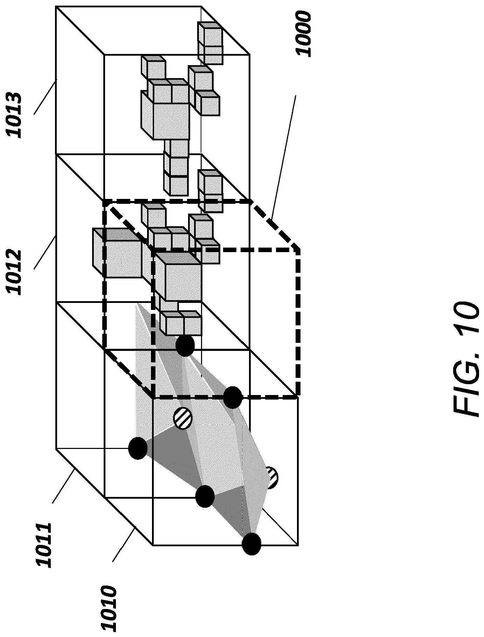

FIG. 10 shows an example of a tree-based geometry representation model. More specifically, FIG. 10 shows an example of a tree-based geometry representation model to represent a portion of a point cloud geometry contained in a current sub-volume (e.g., current sub-volume 1000) and either tree-based or TriSoup-based geometry representation models to represent portions of the point cloud geometry contained in neighboring sub-volumes (e.g., neighboring sub-volumes 1010 to 1013). TriSoup-based geometry representation models, as shown for example in FIG. 10, may represent the portions of the point cloud geometry contained in the two neighboring sub-volumes 1010 and 1011, and tree-based geometry representation models may represent, for example, the portions of the point cloud geometry contained in the two neighboring sub-volumes 1012 and 1013. In at least some technologies, information associated with the tree-based geometry representation model of a current sub-volume (e.g., current sub-volume 1000) may be coded, for example, based on information associated with the tree-based geometry representation model of neighboring sub-volumes (e.g., the two neighboring sub-volumes 1012, 1013), but not on information associated with the triangle-based geometry representation models of other neighboring sub-volumes (e.g., the two neighboring sub-volumes 1010 and 1011).

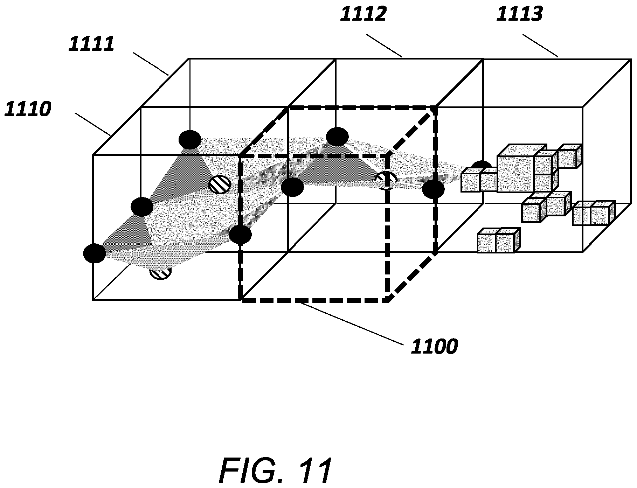

FIG. 11 shows an example of a TriSoup-based geometry representation model. More specifically, FIG. 11 shows an example of a TriSoup-based geometry representation model to represent a portion of the point cloud geometry contained in a current sub-volume (e.g., the current sub-volume 1100) and either a tree-based geometry representation model or a TriSoup-based geometry representation model to represent portions of the point cloud geometry contained in neighboring sub-volumes (e.g., four neighboring sub-volumes 1110 to 1113). TriSoup-based geometry representation models may represent portions of the point cloud geometry contained in neighboring sub-volumes (e.g., the three neighboring sub-volumes 1110, 1111 and 1112), and a tree-based geometry representation model may represent a portion of the point cloud geometry contained in a neighboring sub-volume (e.g., the neighboring sub-volume 1113). In at least some technologies, information associated with the TriSoup-based geometry representation model of a current sub-volume (e.g., current sub-volume 1100) may be coded, for example, based on information associated with the triangle-based geometry representation models of neighboring sub-volumes (e.g., three neighboring sub-volumes 1110, 1111, 1112), but not on information associated with the tree-based geometry representation model of another neighboring sub-volume (e.g., neighboring sub-volume 1113).

Examples described herein are related to converting (e.g., regenerating, transforming) geometry representation models of neighboring sub-volumes of a current sub-volume to be coded such that converted geometry representation models are of the same type as that used to represent a geometry of a portion of a point cloud contained in the current sub-volume. Additional geometry information of neighboring sub-volumes of the current sub-volume may be obtained to predictively code geometry information of the geometry representation model representing the point cloud portion in the current sub-volume. Increasing the amount of relevant geometry information may lead to higher prediction accuracy, which leads to less coding bits and higher compression. First information associated with a first type of geometry representation model may represent a first portion of a point cloud geometry contained in a first sub-volume of a volume encompassing the point cloud geometry. The first information associated with a first type of geometry representation model may be obtained. The first portion of the point cloud geometry may be reconstructed using the first information. A second type of geometry representation model may represent a second portion of the point cloud geometry contained in a second sub-volume neighboring the first sub-volume. Based on the second type of geometry representation model and the first type of geometry representation model being different from the second type, second information associated with the second type of geometry representation model representing the reconstructed first portion may be generated. Third information associated with the second type of geometry representation model representing the second portion of the point cloud geometry may be coded, for example, based on the second information.

The examples described herein may allow coding information (e.g., third information) associated with a second type of geometry representation model to represent a portion of the point cloud geometry contained in a current sub-volume (e.g., second sub-volume) based on generated information associated with second type of geometry representation model (different from the first type of geometry representation model) to represent portions of the point cloud geometry contained in neighboring sub-volumes (e.g., first sub-volume) containing a portion of the point cloud geometry that is represented by the first type of geometry representation model.

The information associated with a tree-based geometry representation model may be coded, for example, based on information generated from information associated with a first type of geometry representation model. The first type of geometry representation model may be, for example, a TriSoup-based geometry representation model. The TriSoup-based geometry representation model may represent a portion of the point cloud geometry contained in one neighboring sub-volume. The information associated with a tree-based geometry representation model may be coded, for example, based on information generated from information associated with the first type of geometry representation model (e.g., TriSoup-based geometry representation model), for example, if the second type of geometry representation model is a tree-based geometry representation model. The information associated with the triangle-based geometry representation model may be coded, for example, based on information generated from information associated with a first type of geometry representation model. The first type of geometry representation model ma be, for example, a tree-based geometry representation model. The tree-based geometry representation model may represent a portion of the point cloud geometry contained in one neighboring sub-volume. The information associated with the triangle-based geometry representation model may be coded, for example, based on information generated from information associated with a first type of geometry representation model, for example, if the second type of geometry representation model is a triangle-based geometry representation model (e.g., a TriSoup-based geometry representation model).

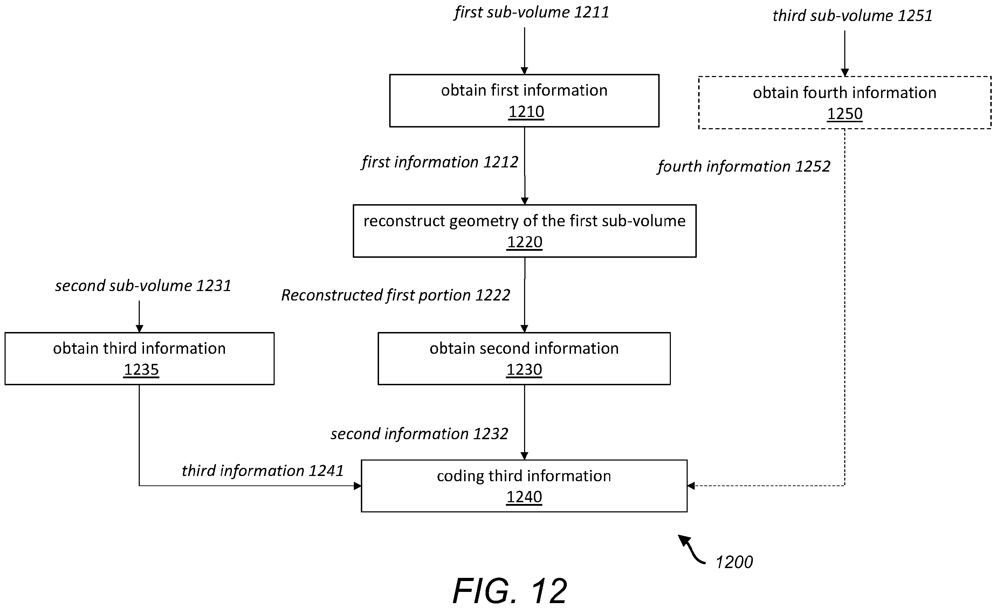

FIG. 12 shows an example process 1200 for coding third information. The third information may be associated with a second type of geometry representation model representing a second portion of a point cloud geometry contained in a second sub-volume (e.g., a current sub-volume) of a volume encompassing the point cloud. Coding third information may be interpreted, for example, as encoding the third information in a bitstream Coding third information may be interpreted, for example, as decoding the third information from the bitstream. Process 1200 may be performed, for example, by an encoder (e.g., encoder 114 as described herein with respect to FIG. 1), an example computer system 2100 in FIG. 21, and/or an example computing device 2230 in FIG. 22. Coding third information may include the encoder encoding the third information in the bitstream. Process 1200 may be performed, for example, by a decoder (e.g., decoder 120 as described herein with respect to FIG. 2). Coding third information may include the decoder decoding the third information from a bitstream. As shown in FIG. 12, steps 1210 - 1250 may represent components within the encoder or the decoder.

At step 1210, first information (e.g., first information 1212) may be obtained. The first information (e.g., first information 1212) may be associated with a first type of geometry representation model representing a first portion of a point cloud geometry contained in a first sub-volume (e.g., first sub-volume 1211) of the volume encompassing the point cloud geometry. The first type of geometry representation model may be a tree-based geometry representation model, for example, an occupancy tree. The first information (e.g., first information 1212) may be occupancy related information, for example, as described herein with respect to FIGS. 3-4. The first type of geometry representation model may be a triangle-based geometry representation model, for example, a TriSoup model/scheme. The first information (e.g., first information 1212) may be TriSoup related information, for example, as described herein with respect to FIGS. 7-9.

At step 1220, a reconstructed first portion (e.g., reconstructed first portion 1222) of the point cloud geometry may be obtained. The reconstructed first portion (e.g., reconstructed first portion 1222) may be obtained, for example, by reconstructing the first portion of the point cloud using the first information (e.g., first information 1212). At step 1230, second information (e.g., second information 1232) may be generated. The second information (e.g., second information 1232), for example, based on a second type of geometry representation model representing a second portion of the point cloud geometry contained in a second sub-volume 1231 (e.g., current sub-volume) neighboring the first sub-volume. The first type of geometry representation model may be different from the second type of geometry representation model. The second information may be associated with the second type of geometry representation model representing the reconstructed first portion (e.g., reconstructed first portion 1222) of the point cloud geometry. The process at step 1230 may be performed, for example, based on (e.g., in response to) an indication of the second sub-volume (e.g., second sub-volume 1231). The second sub-volume may correspond, for example, to a current sub-volume to be coded. The process at step 1230 may be performed, for example, based on an indication of the second sub-volume being coded using the second type of geometry representation model. The second type of geometry representation model may be different from the first type of geometry representation model used to represent point cloud geometry contained in the first sub-volume (e.g., first sub-volume 1211) neighboring the second sub-volume.

At step 1235, third information (e.g., third information 1241) associated with the second type of geometry representation model representing the second portion of the point cloud geometry, may be obtained. At step 1240, third information (e.g., third information 1241) may be coded. The third information may be coded, for example, based on the second information (e.g., second information 1232). At step 1240, the process 1200 may further comprise obtaining fourth information (e.g., fourth information 1252). The fourth information may be associated with the second type of geometry representation model representing a third portion of a point cloud geometry contained in a third sub-volume (e.g., third sub-volume 1251) neighboring the second sub-volume (e.g., second sub-volume 1231). The third information (e.g., third information 1241) may be coded. The third information may be coded, for example, based on the second information (e.g., second information 1232). The third information may be coded, for example, based on the second information (e.g., second information 1232)and, if available, the fourth information (e.g., fourth information 1252).

The examples described herein may allow coding the third information associated with the second type of geometry representation model representing the second portion of the point cloud geometry. The third information may be coded, for example, based on information associated with both the first and the second types of geometry representation models of neighboring sub-volumes. The third information associated with a tree-based geometry representation model may be coded, for example, based on first information associated with a triangle-based geometry representation model and fourth information associated with tree-based geometry representation model. The third information associated with a triangle-based geometry representation model may be coded, for example, based on first information associated with a tree-based geometry representation model and fourth information associated with triangle-based geometry representation model.

The third information (associated with the second type of geometry representation model) may be coded, for example, based on a plurality of reconstructed neighboring sub-volumes. The plurality of reconstructed neighboring sub-volumes may include at least one sub-volume that was reconstructed using the first type of geometry representation model (e.g., reconstructed first portion 1222) and one sub-volume (e.g., third sub-volume 1251) that was reconstructed using the second type of geometry representation model. Neighboring sub-volumes coded using different geometry representation models may be considered in coding (e.g., used in context selection) the third information (e.g., third information 1241). Neighboring sub-volumes coded using different geometry representation models may be considered in coding, for example, by obtaining the second information from reconstructed first portion 1222 at step 1230.

Process 1200 may further comprise coding a first indication indicating the second type of geometry representation model. An encoder may encode the first indication in a bitstream. A decoder may decode the first indication from a bitstream.

The first indication may indicate, for example, a tree-based geometry representation model or a triangle-based geometry representation model. The triangle-based geometry representation model may include, for example, a TriSoup-based geometry representation model. The triangle-based geometry representation model may be associated with the second sub-volume (e.g., current sub-volume). The first indication may be signaled in a bitstream for at least one sub-volume containing a portion of the point cloud geometry. The first indication may be signaled, for example, for each sub-volume containing a portion of the point cloud geometry. The first indication may be signaled, for example, for each group of more than one sub-volume containing a portion of the point cloud geometry.

Coding the third information 1241 (as shown for example at step 1240) may comprise binarizing the third information 1241 and coding (e.g., entropy coding) the binarized third information 1241. Coding the third information 1241 (as shown for example at step 1240) may comprise binarizing the third information 1241 and coding (e.g., entropy coding) the binarized third information 1241, for example, based on a contextual information derived from the second information 1232 by a coder (e.g., a binary entropy coder). The binarized third information 1241 may be coded (e.g., entropy coded). The binarized third information 1241 may be coded, for example, based on a contextual information derived from the second information 1232 and fourth information 1252.

Coding, (e.g., entropy coding) may use probabilities, for example, based on the contextual information. The coder (e.g., binary entropy coder) may be Context Adaptive Binary Arithmetic Coder (CABAC) in which the contexts are selected, for example, based on the contextual information. The coder (e.g., binary entropy coder) may be OBUF or dynamic OBUF as discussed herein, for example, based on the contextual information.

The first type of geometry representation model may be triangle-based geometry representation model representing the first portion of the point cloud and the second type of geometry representation model may be tree-based geometry representation model representing the reconstructed first portion 1222 of the point cloud, the second portion of the point cloud and the third portion of the point cloud.

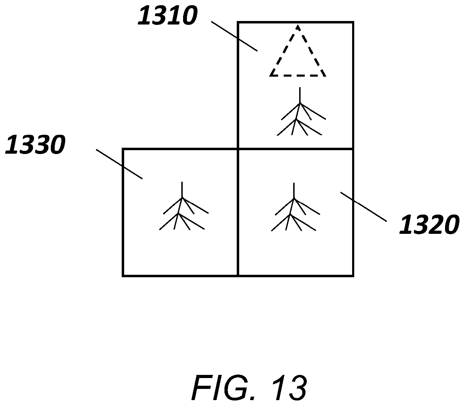

FIG. 13 shows an example of first and second type geometry representation models. More specifically, FIG. 13 shows an example of first and second type geometry representation models representing portions of the point cloud. A triangle-based geometry representation model, as shown for example by a dashed triangle in FIG. 13, may represent the first portion of the point cloud contained in the first sub-volume 1310. Tree-based geometry representation model, as shown for example by a small tree in FIG. 13, may represent the reconstructed first portion 1222 of the point cloud contained in the first sub-volume 1310, the second portion of the point cloud contained in a second sub-volume 1320 and the third portion of the point cloud contained in a third sub-volume 1330. The sub-volumes 1310, 1320, and 1330 may be neighboring sub-volumes.

The first information may be associated with TriSoup-based geometry representation model of the first sub-volume 1310 associated with an occupied leaf node of a master occupancy tree (e.g., first TriSoup node). The first information may include vertex information of each vertex along TriSoup edge of TriSoup triangle belonging to the first TriSoup node. Vertex information associated with a vertex of a TriSoup triangle of the first TriSoup node may be a presence flag on an edge of the TriSoup triangle. Vertex information associated with a vertex of a TriSoup triangle of the first TriSoup node may be a presence flag on an edge of the TriSoup triangle and a position of the vertex along an edge of the TriSoup triangle.

The second, respectively third and fourth, information may include information associated with a local space-partitioning of the first sub-volume 1310, respectively with the second sub-volume 1320 and third sub-volume 1330. The local space-partitioning of the first 1310, respectively second 1320 and third 1330 sub-volume may be a local space partitioning tree. The local space-partitioning of the first 1310, respectively second 1320 and third 1330 sub-volume may be, for example, a local occupancy tree, and may be a part of the master occupancy tree. The second, respectively third and fourth, information may include occupancy bits of the occupancy words of occupied leaf nodes of the local occupancy tree of the first 1310, respectively second 1320 and third 1330 sub-volume.

The reconstructed first portion 1222 of the point cloud geometry may comprise a set of points defined by voxelizing the at least one triangle of the triangle-based geometry representation model representing the first portion of the point cloud. Voxelization of triangle may be performed as described herein with respect to FIGS. 9A-9B.

Tree-based geometry representation model representing the reconstructed first portion 1222 contained in the first sub-volume 1310 may comprise a local space-partitioning of first sub-volume 1310. The local space-partitioning of first sub-volume 1310 may be obtained, for example, by recursively splitting the first sub-volume 1310 into local sub-volumes containing at least one point of the set of points. The local space-partitioning of first sub-volume 1310 may be a local space-partitioning tree and the second information 1232 may indicate information related to the leaf nodes of the local space-partitioning tree.

The local space-partitioning tree may be an occupancy tree comprising occupied leaf nodes containing at least one point of the set of points. The second information 1232 may indicate occupancy bit associated with each leaf node of the local space-partitioning tree. The local space-partitioning tree may be part of a master space-partitioning tree splitting the volume encompassing the point cloud geometry into the sub-volumes. The recursive splitting may be stopped, for example, if a stopping condition is fulfilled.

The stopping condition may be fulfilled, for example, if a local sub-volume corresponding to each leaf node of the local space-partitioning tree contains a single point of the set of points. The stopping condition may be fulfilled, for example, if the size of a local sub-volume corresponding to one leaf node of the local space-partitioning tree is below a minimum size. The minimum size may be signaled in a bitstream. The stopping condition may be fulfilled, for example, if a maximum depth is reached. The maximum depth may be signaled in the bitstream.

The third information 1241 may indicate an occupancy bit associated with each leaf node of a local spanning-tree of the tree-based geometry representation model representing the second portion of the point cloud. The third information may be entropy coded by OBUF or dynamic OBUF, for example, based on the second information indicating occupancy bits of leaf nodes of the local space-partitioning tree of tree-based geometry representation model representing the reconstructed first portion 1222 of the point cloud. The fourth information 1252 may indicate an occupancy bit associated with each leaf node of a local spanning-tree of the tree-based geometry representation model to represent the third portion of the point cloud. The third information 1241 may be entropy coded by OBUF or dynamic OBUF, for example, based on the second information and the fourth information.

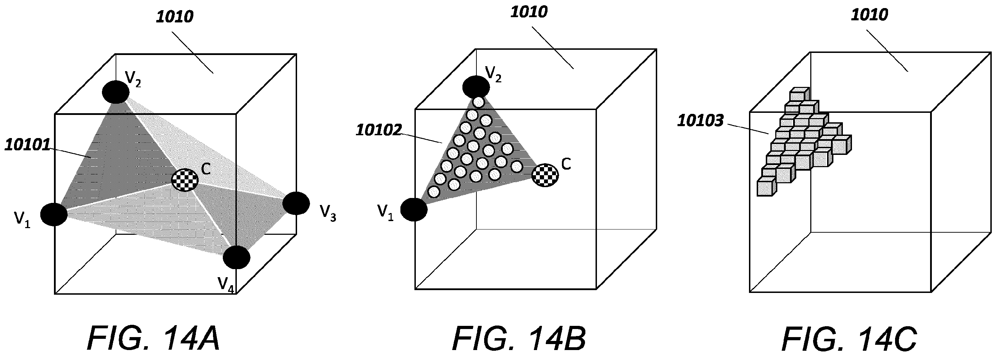

FIG. 14A, FIG. 14B and FIG. 14C show an example of a local space-partitioning tree. More specifically, FIG. 14A, FIG. 14B and FIG. 14C show an example of a local space-partitioning tree (e.g., local space-partitioning tree 10103) of a tree-based geometry representation model representing a reconstructed portion (e.g., reconstructed portion 1222) of the point cloud geometry contained in a sub-volume (e.g., the sub-volume 1010). FIG. 14A shows a triangle-based geometry representation model representing the portion of the point cloud geometry contained in the sub-volume 1010. The triangle-based geometry representation model may comprise four triangles defined from four vertices (e.g., vertices V1, V2, V3, V4) on edges of the sub-volume 1500 and a centroid point C: V1V2C, V2V3C, V3V4C and V4V1C. An example of voxelization of the triangle 10101 (V1V2C) is shown in FIG. 14B. Voxelization of the other triangles (V2V3C, V3V4C and V4V1C) are not shown for ease of illustration. The voxelization of the triangle 10101 may provide a set of points 10102 corresponding to geometry of a portion (or sub-portion) of the reconstructed portion 1222. The other portions of the reconstructed geometry corresponding to reconstructed portion 1222 may be obtained, for example, by voxelizing the three other triangles V2V3C, V3V4C and V4V1C. FIG. 14C shows an example of the local space-partitioning tree 10103. As an example, only the portion of the local space-partitioning tree 10103 corresponding to the set of points 10102 is represented in FIG. 14C. The portion of local space-partitioning tree 10103 may be generated (or constructed) from the set of points 10102 (and corresponding to voxels) determined from triangle 10101 of the triangle-based geometry representation model.

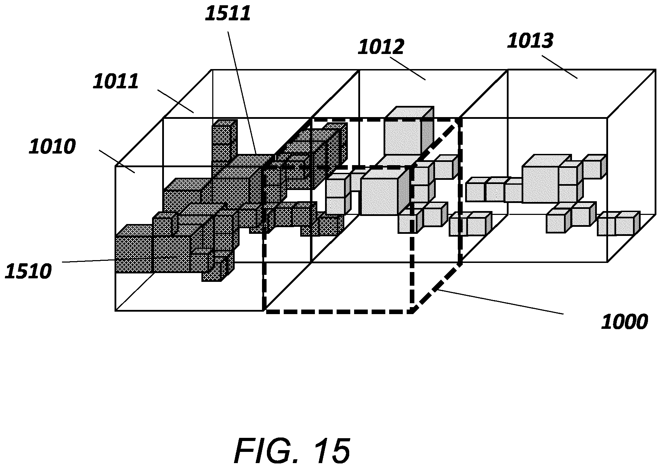

FIG. 15 shows an example of tree-based geometry representation models. More specifically, FIG. 15 shows an example of tree-based geometry representation models representing the portions of the point cloud geometry contained in the sub-volumes 1010 to 1013 as described herein with respect to FIG. 10. As shown with respect to FIG. 15, a tree-based geometry representation model may represent the geometry of the portion of the point cloud geometry contained in the second sub-volume (e.g., the current sub-volume 1000 to be coded). Triangle-based geometry representation models may represent the portions of the point cloud geometry contained in the two neighboring sub-volumes 1010 and 1011 (e.g., first sub-volume). Tree-based geometry representation models may represent the portions of the point cloud geometry contained in the two neighboring sub-volumes 1012 and 1013 (e.g., third sub-volume). The triangles of the triangle-based geometry representation model of the sub-volumes 1010 may be voxelized to obtain (e.g., determine) a set of points. A tree-based geometry representation model including a space-partitioning tree 1510 of the sub-volume 1010 may be obtained, for example, by recursively splitting the set of points. The triangles of the triangle-based geometry representation model of sub-volume 1011 may be voxelized to obtain (e.g., determine) a set of points. A tree-based geometry representation model including a space-partitioning tree 1511 of the sub-volume 1011 may be obtained, for example, by recursively splitting the set of points. The third information of the tree-based geometry representation model to represent the second portion of the point cloud geometry contained in the second sub-volume 1000 may be coded. The third information of the tree-based geometry representation model to represent the second portion of the point cloud geometry contained in the second sub-volume 1000 may be coded, for example, based on the information of the tree-based geometry representation models of the sub-volumes 1010 to 1013. The first type of geometry representation model may be tree-based geometry representation model representing the first portion of the point cloud. The second type of geometry representation model may be triangle-based geometry representation model representing the reconstructed first portion 1222 of the point cloud geometry, the second portion of the point cloud geometry and the third portion of the point cloud geometry.

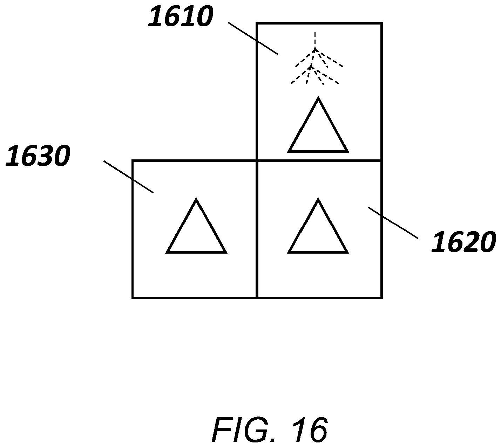

FIG. 16 shows an example of first and second type representation models representing portions of the point cloud. A tree-based geometry representation model, as shown for example by a dashed tree in FIG. 16, may represent the first portion of the point cloud contained in the first sub-volume 1610. Triangle-based geometry representation models, as shown for example by a triangle in FIG. 16, may represent the reconstructed first portion 1222 of the point cloud contained in the first sub-volume 1610, the second portion of the point cloud contained in a second sub-volume 1620 and the third portion of the point cloud contained in a third sub-volume 1630. The sub-volumes 1610, 1620 and 1630 may be neighboring sub-volumes.

The first information may be associated with tree-based geometry representation model of the first sub-volume 1610 associated with an occupied leaf node of a master occupancy tree (e.g., TriSoup node). The first information may include a local space-partitioning of the first sub-volume.

The second information may include information associated with triangle-based geometry representation model to represent the reconstructed first portion 1222 of the point cloud geometry contained in the first sub-volume 1610. The third, respectively fourth, information may include information associated with triangle-based geometry representation model representing the second portion contained in the second sub-volume 1620, respectively the third portion of the point cloud geometry contained in the third sub-volume 1630.

The third, respectively fourth information, may include vertex information of each vertex along TriSoup edge of TriSoup triangle belonging to a TriSoup node corresponding to the second sub-volume 1620, respectively third sub-volume 1630. Vertex information associated with a vertex along an edge of a TriSoup node, may be a presence flag on an edge of the TriSoup node. Vertex information associated with a vertex along an edge of a TriSoup node, may be a presence flag on an edge of the TriSoup node and a position of the vertex along an edge of the TriSoup node.

The reconstructed first portion 1222 of the point cloud geometry may be a set of points derived from a space-partitioning of the tree-based geometry representation model representing the first portion of the point cloud contained in the first sub-volume 1610. The set of points may be derived, for example, based on points defined as being centers of sub-volumes of the space-partitioning of the tree-based geometry representation model representing the first portion of the point cloud contained in the first sub-volume 1610.

The center point of each occupied leaf node of the space-partitioning tree may be a point of the set of points. The center point of each occupied leaf node of the space-partitioning tree may be a point of the set of points, for example, if the space-partitioning is a space-partitioning tree.

Triangle-based geometry representation model representing the reconstructed first portion 1222 of the point cloud geometry contained in the first sub-volume 1610 may comprise at least one triangle. The at least one triangle may be defined by vertices located on edges of the first sub-volume 1610. The second information may include vertex information of at least one vertex along at least one edge of the first sub-volume 1610. In some instances there may be at most one vertex per edge.

Vertex information associated with a vertex along an edge of the first sub-volume 1610 may be a presence flag of the vertex on an edge of the first sub-volume 1610. Vertex information associated with a vertex along an edge of the first sub-volume 1610 may be a presence flag of the vertex on an edge of the first sub-volume 1610 and a position of the vertex along an edge of the sub-volume 1610. A vertex along an edge of the first sub-volume 1610 may be derived, for example, based on a sub-set of the set of points. The sub-set of points may be derived, for example, based on points of the set of points having a distance lower than (e.g., smaller than, below, etc.) a distance threshold from the edge.

A position of a vertex along an edge of the first sub-volume 1610 may be derived, for example, based on projection of points of the sub-set of points on the edge. The points of the sub-set of points may be orthogonally projected on the edge.

Projection of the points of the sub-set of points on the edge may define positions of the projected points of the sub-set of points on the edge. The edge may be defined between a first and a second vertex. Projection of a point on the edge may be a position of the projected point on the edge between the first and second vertex. The position of the vertex along the edge may be derived, for example, based on an average or median value of the positions of the projected points of the sub-set on the edge.

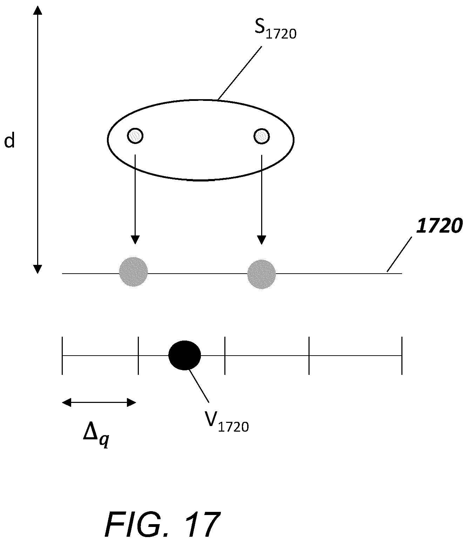

FIG. 17 shows an example of deriving a vertex on an edge of a first sub-volume. More specifically, FIG. 17 shows an example of deriving a vertex $V_{1720}$ on an edge 1720 of the first sub-volume 1610. The vertex $V_{1720}$ on the edge 1720 of the first sub-volume 1610 is derived, for example, based on the reconstructed first portion 1222 of the point cloud geometry. The reconstructed first portion 1222 may comprise a set of points derived from the space-partitioning of the first sub-volume 1610 as discussed herein. Distance between each point of the set of points and the edge 1720 may be determined (e.g., calculated, obtained, etc.). A point may be added to the sub-set $S_{1720}$. The point may be added to the sub-set $S_{1720}$, for example, if the calculated distance is lower than a threshold d. The sub-set $S_{1720}$ may comprise two points of the set of points. The points of the sub-set $S_{1720}$ may be projected. The points of the sub-set $S_{1720}$ may be projected, for example orthogonally, on the edge 1720, The vertex $V_{1720}$ may be derived, for example, based on the positions of the projected points along the edge 1720. The position of the vertex $V_{1720}$ may be determined (e.g., calculated, obtained), for example, based on an average of the positions of the projected points of the sub-set $S_{1720}$ on the edge 1720. The presence flag of the edge may indicate that the edge comprises a vertex and the second information comprises the presence flag (true) and the position of the vertex along the edge. The presence flag of the edge may indicate the edge comprises a vertex and the second information comprises the presence flag (true) and the position of the vertex along the edge, for example, if a vertex is derived for a sub-set of points. The presence flag (e.g., the flag being set to false) may indicate that the edge does not comprise a vertex. The presence flag (false) may indicate that the edge does not comprise a vertex, for example, if no vertex is derived for an edge.

The position of the vertex $V_{1720}$ may be quantized along the edge 1720. The position of the vertex $V_{1720}$ may be quantized along the edge 1720, for example, based on a quantizing parameter $\Delta p$. The edge may be split into fourth intervals of a same size (e.g., uniform quantizing) and an index, for example, equal 1 to 4, may indicate the position of a vertex along the edge.

The third information 1241 may indicate vertex information of vertex along edge of the second sub-volume 1620. Vertex information may be coded (e.g., entropy coded) by OBUF or dynamic OBUF, for example, based on the second information indicating vertex information of at least one vertex along at least one edge of the first sub-volume 1610.

The third information 1241 may indicate presence of flag of a vertex on an edge of the second sub-volume 1620. The presence flag may be coded (e.g., entropy coded) by OBUF or dynamic OBUF, for example, based on the second information indicating presence flag of at least one vertex along at least one edge of the first sub-volume 1610. The third information 1241 may indicate position of a vertex on an edge of the second sub-volume 1620. The position of the vertex may be coded (e.g., entropy coded) by OBUF or dynamic OBUF, for example, based on the second information indicating position of at least one vertex along at least one edge of the first sub-volume 1610. The fourth information 1252 may indicate vertex information of vertex along edge of the third sub-volume 1630. Vertex information may be coded (e.g., entropy coded) by OBUF or dynamic OBUF, for example, based on the second and fourth information.

The fourth information 1252 may indicate presence of flag of a vertex on an edge of the third sub-volume. The presence flag may be coded (e.g., entropy coded) by OBUF or dynamic OBUF, for example, based on the second and fourth information. The fourth information may indicate position of a vertex on an edge of the third sub-volume. The position of the vertex may be coded (e.g., entropy coded) by OBUF or dynamic OBUF, for example, based on the second and fourth information.

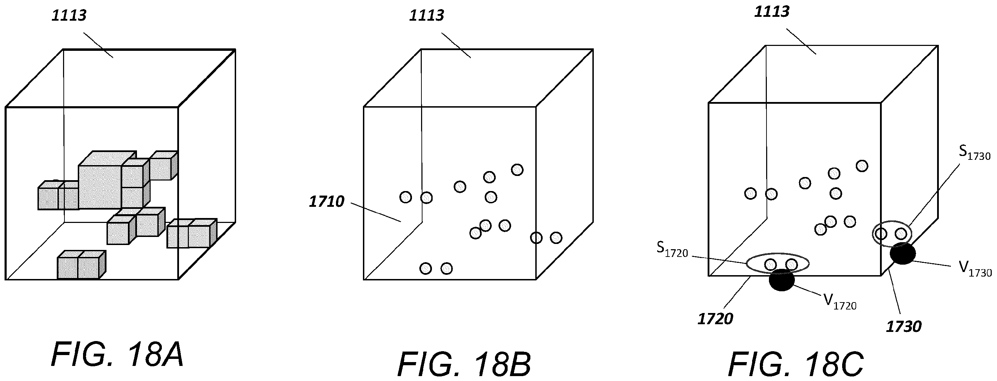

FIG. 18A, FIG. 18B and FIG. 18C show an example of triangle-based geometry representation model. More specifically, FIG. 18A, FIG. 18B and FIG. 18C show an example of triangle-based geometry representation model representing the reconstructed first portion 1222 of the sub-volume 1113, as described herein with respect to FIG. 11. FIG. 18A shows a tree-based geometry representation model representing the portion of the point cloud geometry contained in the sub-volume 1113. FIG. 18B shows the set of points obtained, for example as being centers of local sub-volumes associated with occupied leaf nodes of the local space-partitioning of the tree-based geometry representation model described herein with respect to FIG. 18A. FIG. 18C shows two sub-sets of points derived from the set of points described herein with respect to FIG. 18B. The first sub-set of points may comprise two points close to the edge 1720 of the sub-volume 1113. The vertex $V_{1720}$ may be derived, for example, based on the points of the first sub-set of points as discussed herein with respect to FIG. 17. The second sub-set of points may comprise two points close to the edge 1730 of the sub-volume 1113. The vertex $V_{1730}$ may be derived, for example, based on the points of the second sub-set of points as discussed herein with respect to FIG. 17. The number of points of sub-sets of points may not be limited to a particular number of points.

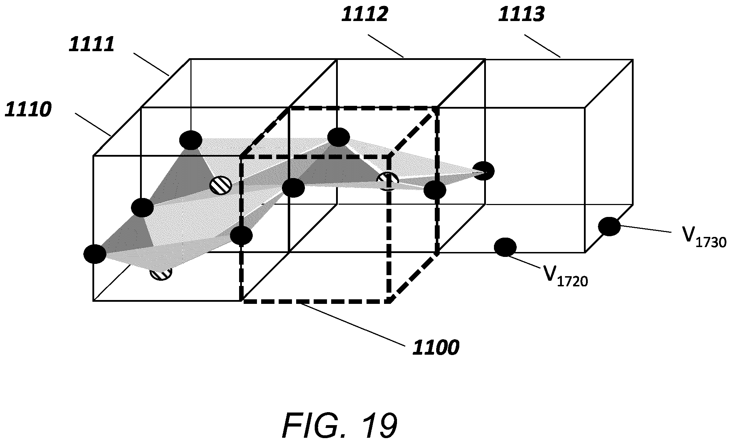

FIG. 19 shows an example of triangle-based geometry representation models. More specifically, FIG. 19 shows an example of triangle-based geometry representation models representing portions of the point cloud geometry contained in the sub-volumes 1110 to 1113 as described herein with respect to FIG. 11. As shown for example in FIG. 19, a triangle-based geometry representation model may represent the geometry of the portion of the point cloud geometry contained in the second sub-volume (e.g., current sub-volume 1100). Triangle-based geometry representation models may represent the portions of the point cloud geometry contained in the three neighboring sub-volumes 1110, 1111 and 1112 (e.g., third sub-volume) and tree-based geometry representation model may represent the portion of the point cloud geometry contained in the neighboring sub-volume 1113 (e.g., first sub-volume). The vertex $V_{1720}$ may be derived, for example, based on the first sub-set of points of the set of points (e.g., reconstructed first portion 1222). Vertex $V_{1730}$ may be derived, for example, based on the second sub-set of points of the set of points as described herein with respect to FIG. 17 and FIG. 18.

The definition of the triangle-based geometry representation model of the portion of the set of points contained in the sub-volume 1113 may be limited to the definition of vertices on edges of the sub-volume 1113. The definition of the triangle-based geometry representation model of the portion of the set of points contained in the sub-volume 1113 may be limited to the definition of vertices on edges of the sub-volume 1113, for example, if vertex information of those vertices are useful for coding vertex information of triangles of the triangle-based geometry representation model representing the second portion contained in the second sub-volume 1100. The third information 1241 of the triangle-based geometry representation model representing the second portion of the point cloud geometry contained in the second sub-volume 1100 may be coded, for example, based on the information of the triangle-based geometry representation models of the neighboring sub-volumes 1110 to 1113.

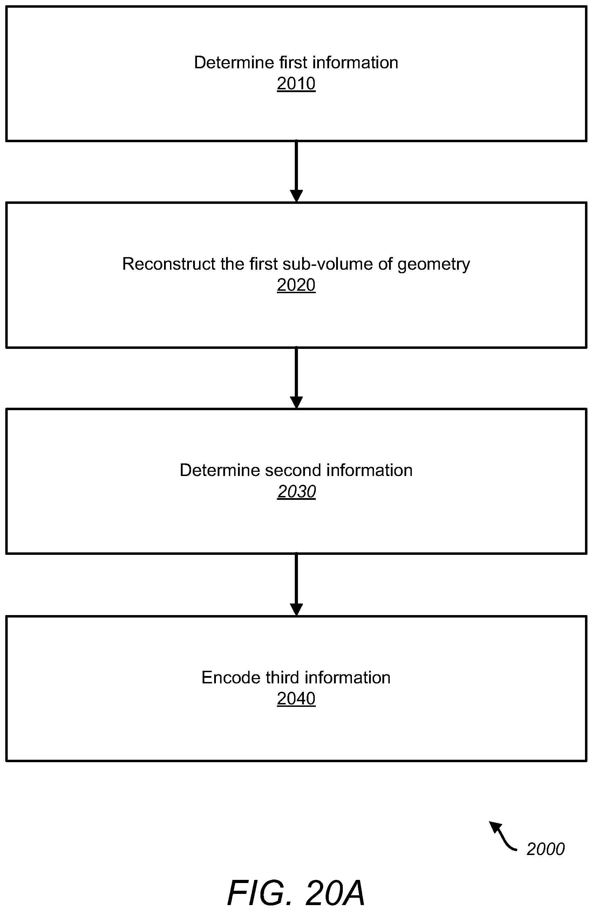

FIG. 20A shows an example method for encoding a third information. For example, FIG. 20A shows a flowchart 2000 of an example method for encoding a third information. The method of flowchart 2000 may be performed and/or implemented by a computing device, for example, by an encoder (e.g., encoder 114 of FIG. 1). At the encoder, a point cloud geometry may be encoded into a bitstream.

At step 2010, first information may be determined (e.g., obtained, generated, retrieved, calculated). The first information may be associated with a first type of geometry representation model representing a first portion of a point cloud geometry contained in a first sub-volume of the volume encompassing the point cloud geometry.

At step 2020, a reconstructed first portion of the point cloud geometry may be obtained by reconstructing the first portion of the point cloud using the first information.

At step 2030, second information may be determined (e.g., obtained, generated, retrieved, calculated). The second information may be determined, for example, based on a second type of geometry representation model representing a second portion of the point cloud geometry contained in a second sub-volume neighboring the first sub-volume. The first type of geometry representation model may be different from the second type of geometry representation model. The second information may be associated with the second type of geometry representation model representing the reconstructed first portion of the point cloud geometry.

At step 2040, third information may be encoded. The third information may be encoded, for example, based on the second information. The third information may be associated with the second type of geometry representation model representing the second portion of the point cloud geometry.

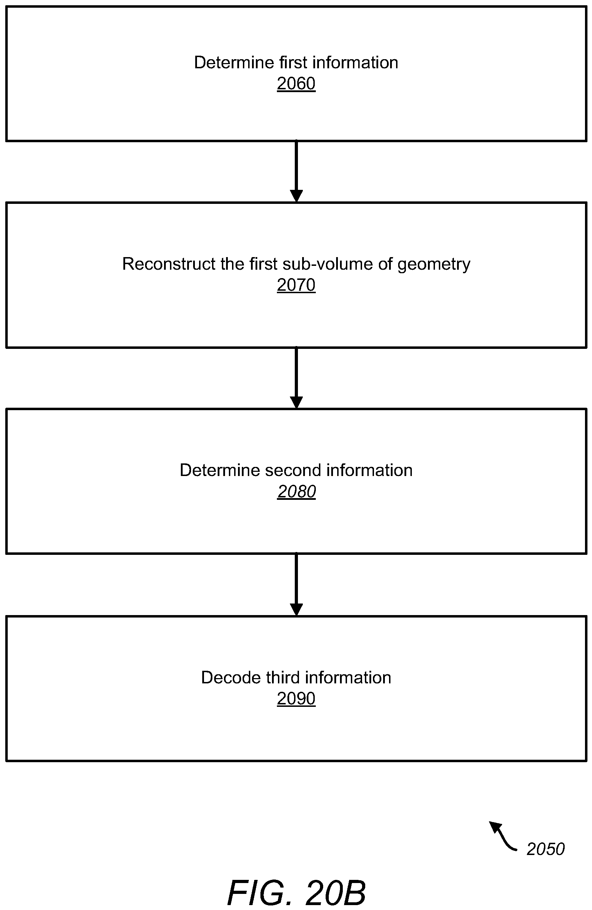

FIG. 20B shows an example method for decoding a third information. For example, FIG. 20B shows a flowchart 2050 of an example method for decoding the third information. The method of flowchart 2000 may be performed and/or implemented by a computing device, for example, a decoder (e.g., decoder 120 of FIG. 1). At the decoder, the point cloud geometry (as encoded by the encoder) may be decoded from the bitstream.

At step 2060, first information may be determined (e.g., obtained, generated, retrieved, calculated). The first information may be associated with a first type of geometry representation model representing a first portion of a point cloud geometry contained in a first sub-volume of the volume encompassing the point cloud geometry.

At step 2070, a reconstructed first portion of the point cloud geometry may be obtained by reconstructing the first portion of the point cloud using the first information.

At step 2080, second information may be determined (e.g., obtained, generated, retrieved, calculated). The second information may be determined, for example, based on a second type of geometry representation model representing a second portion of the point cloud geometry contained in a second sub-volume neighboring the first sub-volume. The first type of geometry representation model may be different from the second type of geometry representation model. The second information may be associated with the second type of geometry representation model representing the reconstructed first portion of the point cloud geometry.

At step 2090, third information may be decoded. The third information may be decoded, for example, based on the second information. The third information may be associated with the second type of geometry representation model representing the second portion of the point cloud geometry.

FIG. 21 shows an example computer system in which examples of the present disclosure may be implemented. For example, the example computer system 2100 shown in FIG. 21 may implement one or more of the methods described herein. For example, various devices and/or systems described herein (e.g., in FIG. 1) may be implemented in the form of one or more computer systems 2100. Furthermore, each of the steps of the flowcharts depicted in this disclosure may be implemented on one or more computer systems 2100.

The computer system 2100 may comprise one or more processors, such as a processor 2104. The processor 2104 may be a special purpose processor, a general purpose processor, a microprocessor, and/or a digital signal processor. The processor 2104 may be connected to a communication infrastructure 2102 (for example, a bus or network). The computer system 2100 may also comprise a main memory 2106 (e.g., a random access memory (RAM)), and/or a secondary memory 2108.

The secondary memory 2108 may comprise a hard disk drive 2110 and/or a removable storage drive 2112 (e.g., a magnetic tape drive, an optical disk drive, and/or the like). The removable storage drive 2112 may read from and/or write to a removable storage unit 2116. The removable storage unit 2116 may comprise a magnetic tape, optical disk, and/or the like. The removable storage unit 2116 may be read by and/or may be written to the removable storage drive 2112. The removable storage unit 2116 may comprise a computer usable storage medium having stored therein computer software and/or data.

The secondary memory 2108 may comprise other similar means for allowing computer programs or other instructions to be loaded into the computer system 2100. Such means may include a removable storage unit 2118 and/or an interface 2114. Examples of such means may comprise a program cartridge and/or cartridge interface (such as in video game devices), a removable memory chip (such as an erasable programmable read-only memory (EPROM) or a programmable read-only memory (PROM)) and associated socket, a thumb drive and USB port, and/or other removable storage units 2118 and interfaces 2114 which may allow software and/or data to be transferred from the removable storage unit 2118 to the computer system 2100.

The computer system 2100 may also comprise a communications interface 2120. The communications interface 2120 may allow software and data to be transferred between the computer system 2100 and external devices. Examples of the communications interface 2120 may include a modem, a network interface (e.g., an Ethernet card), a communications port, etc. Software and/or data transferred via the communications interface 2120 may be in the form of signals which may be electronic, electromagnetic, optical, and/or other signals capable of being received by the communications interface 2120. The signals may be provided to the communications interface 2120 via a communications path 2122. The communications path 2122 may carry signals and may be implemented using wire or cable, fiber optics, a phone line, a cellular phone link, an RF link, and/or any other communications channel(s).

A computer program medium and/or a computer readable medium may be used to refer to tangible storage media, such as removable storage units 2116 and 2118 or a hard disk installed in the hard disk drive 2110. The computer program products may be means for providing software to the computer system 2100. The computer programs (which may also be called computer control logic) may be stored in the main memory 2106 and/or the secondary memory 2108. The computer programs may be received via the communications interface 2120. Such computer programs, when executed, may enable the computer system 2100 to implement the present disclosure as discussed herein. In particular, the computer programs, when executed, may enable the processor 2104 to implement the processes of the present disclosure, such as any of the methods described herein. Accordingly, such computer programs may represent controllers of the computer system 2100.

Features of the disclosure may be implemented in hardware using, for example, hardware components such as application-specific integrated circuits (ASICs) and gate arrays. Implementation of a hardware state machine to perform the functions described herein will also be apparent to persons skilled in the relevant art(s).

FIG. 22 shows example elements of a computing device that may be used to implement any of the various devices described herein, including, for example, a source device (e.g., 102), an encoder (e.g., 114), a destination device (e.g., 106), a decoder (e.g., 120), and/or any computing device described herein. The computing device 2230 may include one or more processors 2231, which may execute instructions stored in the random-access memory (RAM) 2233, the removable media 2234 (such as a Universal Serial Bus (USB) drive, compact disk (CD) or digital versatile disk (DVD), or floppy disk drive), or any other desired storage medium. Instructions may also be stored in an attached (or internal) hard drive 2235. The computing device 2230 may also include a security processor (not shown), which may execute instructions of one or more computer programs to monitor the processes executing on the processor 2231 and any process that requests access to any hardware and/or software components of the computing device 2230 (e.g., ROM 2232, RAM 2233, the removable media 2234, the hard drive 2235, the device controller 2237, a network interface 2239, a GPS 2241, a Bluetooth interface 2242, a WiFi interface 2243, etc.). The computing device 2230 may include one or more output devices, such as the display 2236 (e.g., a screen, a display device, a monitor, a television, etc.), and may include one or more output device controllers 2237, such as a video processor. There may also be one or more user input devices 2238, such as a remote control, keyboard, mouse, touch screen, microphone, etc. The computing device 2230 may also include one or more network interfaces, such as a network interface 2239, which may be a wired interface, a wireless interface, or a combination of the two. The network interface 2239 may provide an interface for the computing device 2230 to communicate with a network 2240 (e.g., a RAN, or any other network). The network interface 2239 may include a modem (e.g., a cable modem), and the external network 2240 may include communication links, an external network, an in-home network, a provider's wireless, coaxial, fiber, or hybrid fiber/coaxial distribution system (e.g., a DOCSIS network), or any other desired network. Additionally, the computing device 2230 may include a location-detecting device, such as a global positioning system (GPS) microprocessor 2241, which may be configured to receive and process global positioning signals and determine, with possible assistance from an external server and antenna, a geographic position of the computing device 2230.

The example in FIG. 22 may be a hardware configuration, although the components shown may be implemented as software as well. Modifications may be made to add, remove, combine, divide, etc. components of the computing device 2230 as desired. Additionally, the components may be implemented using basic computing devices and components, and the same components (e.g., processor 2331, ROM storage 2332, display 2236, etc.) may be used to implement any of the other computing devices and components described herein. For example, the various components described herein may be implemented using computing devices having components such as a processor executing computer-executable instructions stored on a computer-readable medium, as shown in FIG. 22. Some or all of the entities described herein may be software based, and may co-exist in a common physical platform (e.g., a requesting entity may be a separate software process and program from a dependent entity, both of which may be executed as software on a common computing device).

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1A. A method comprising: determining first information associated with a first geometry model representing a first portion of a point cloud geometry contained in a first sub-volume of the point cloud geometry.

Clause 1B. The method of clause 1A, further comprising: reconstructing the first portion of the point cloud geometry using the first information.

Clause 1C. The method of clause 1B, further comprising: determining, based on a second geometry model representing a second portion of the point cloud geometry contained in a second sub-volume neighboring the first sub-volume, second information associated with the second geometry model representing the reconstructed first portion, wherein the first geometry model is different from the second geometry model.

Clause 1D. The method of clause 1C, further comprising: decoding, based on the second information, third information associated with the second geometry model representing the second portion of the point cloud geometry. Reference to clause 1 herein may refer to one or each of clause 1A, clause 1B, clause 1C and clause 1D.

Clause 2. The method of clause 1, further comprising: determining fourth information associated with the second geometry model representing a third portion of the point cloud geometry contained in a third sub-volume neighboring the second sub-volume; and wherein the decoding the third information, from a bitstream, is based on the second information and the fourth information.

Clause 3. The method of any one of clauses 1-2, further comprising: decoding, from a bitstream, a first indication indicating the second geometry model, wherein: the first indication further indicates at least one of: a tree-based geometry model associated with the second sub-volume; or a triangle-based geometry model associated with the second sub-volume; and the first indication is signaled in the bitstream for one or more sub-volumes containing a portion of the point cloud geometry.

Clause 4. The method of any one of clauses 1-3, wherein the decoding the third information further comprises: binarizing the third information; and decoding, based on contextual information derived from the second information, the binarized third information.

Clause 5. The method of any one of clauses 1-4, wherein: the first geometry model is a triangle-based geometry model representing the first portion of the point cloud geometry; and the second geometry model is a tree-based geometry model representing the reconstructed first portion of the point cloud geometry, the second portion of the point cloud geometry, and a third portion of the point cloud geometry.

Clause 6. The method of clause 5, wherein: the reconstructed first portion of the point cloud geometry comprises a set of points defined by voxelizing at least one triangle of the triangle-based geometry model; and the tree-based geometry model representing the reconstructed first portion of the point cloud geometry comprises a local space-partitioning of first sub-volume determined by recursively splitting the first sub-volume into local sub-volumes containing at least one point of the set of points.

Clause 7. The method of clause 6, wherein: the local space-partitioning is a local space-partitioning tree; the second information indicates occupancy bit associated with each leaf node of the local space-partitioning tree; and the local space-partitioning tree is part of a master space-partitioning tree splitting a volume encompassing the point cloud geometry into sub-volumes.

Clause 8. The method of clause 6, wherein: the local space-partitioning is a local space-partitioning tree; and the recursive splitting of the first sub-volume is stopped based on: a local sub-volume corresponding to each leaf node of the local space-partitioning tree contains at least one point of the set of points; or a size of a local sub-volume corresponding to one leaf node of the local space-partitioning tree is below a minimum size.

Clause 9. The method of any one of clauses 1-8, wherein decoding the third information comprises entropy decoding from a bitstream, by a binary entropy coder.

Clause 10. The method of any one of clauses 1-9, wherein the decoding uses probabilities based on the contextual information.

Clause 11. The method of one of clauses 1-10, wherein the binary entropy coder is a Context Adaptive Binary Arithmetic Coder in which the contexts are selected based on the contextual information.

Clause 12. The method of any one of clauses 1-11, wherein the binary entropy coder is Optimal Binary Coders with Update on the Fly (OBUF) or dynamic OBUF based on the contextual information.

Clause 13. The method of any one of clauses 1-12, wherein the third information indicates information related to the leaf nodes of the local space-partitioning tree.

Clause 14. The method of any one of clauses 1-13, wherein the local space-partitioning tree is an occupancy tree comprising occupied leaf nodes containing at least one point of the set of points.

Clause 15. The method of any one of clauses 1-14, wherein the minimum size is signaled in a bitstream.

Clause 16. The method of any one of clauses 1-15, wherein the stopping condition is fulfilled when a maximum depth is reached.

Clause 17. The method of any one of clauses 1-16, wherein the maximum depth is signaled in the bitstream.

Clause 18. The method of any one of clauses 1-17, wherein when the space-partitioning is a space-partitioning tree, the center point of each occupied leaf node of the space-partitioning tree is a point of the set of points.

Clause 19. The method of any one of clauses 1-18, wherein the second information includes vertex information of at least one vertex along at least one edge of the triangle vertices, at most one vertex per edge.

Clause 20. The method of any one of clauses 1-19, wherein one vertex along one edge of the first sub-volume is derived based on a sub-set of the set of points.

Clause 21. The method of any one of clauses 1-20, wherein the sub-set of points is derived based on points of the set of points having a distance lower than a threshold from the edge.

Clause 22. The method of any one of clauses 1-21, wherein position of one vertex along one edge of the first sub-volume is derived based on projection of points of the sub-set of points on the edge.

Clause 23. The method of any one of clauses 1-22, wherein projection of the points of the sub-set of points on the edge defines positions of the projected points of the sub-set of points on the edge.

Clause 24. The method of any one of clauses 1-23, wherein the position of the vertex along the edge is derived based on an average or median value of positions of the projected points of the sub-set on the edge.

Clause 25. The method of any one of clauses 1-24, wherein the third information indicates position of a vertex on an edge of the second sub-volume and the position of the vertex is entropy encoded by OBUF or dynamic OBUF based on the second information indicating position of at least one vertex along at least one edge of the first sub-volume.

Clause 26. The method of any one of clauses 1-25, wherein the fourth information indicates vertex information of vertex along edge of the third sub-volume and vertex information is entropy encoded by OBUF or dynamic OBUF based on the second and fourth information.

Clause 27. The method of any one of clauses 1-26, wherein the fourth information indicates presence of flag of a vertex on an edge of the third sub-volume and the presence flag is entropy encoded by OBUF or dynamic OBUF based on the second and fourth information.

Clause 28. The method of any one of clauses 1-27, wherein the fourth information indicates position of a vertex on an edge of the third sub-volume and the position of the vertex is entropy encoded by OBUF or dynamic OBUF based on the second and fourth information.

Clause 29. A computing device comprising one or more processors and memory storing instructions that, when executed by the one or more processors, cause the computing device to perform the method of any one of clauses 1-28.

Clause 30. A system comprising: a computing device configured to perform the method of any one of clauses 1-28, and a second computing device configured to encode the point cloud frame.

Clause 31. A computer-readable medium storing instructions that, when executed, cause performance of the method of any one of clauses 1-28.

Clause 32A. A method comprising: determining first information associated with a first geometry model representing a first portion of a point cloud geometry contained in a first sub-volume of the point cloud geometry.

Clause 32B. The method of clause 32A, further comprising: determining, based on a second geometry model representing a second portion of the point cloud geometry contained in a second sub-volume neighboring the first sub-volume, second information associated with the second geometry model representing a reconstructed first portion of the point cloud geometry, wherein and the first geometry model is different from the second geometry model.

Clause 32C. The method of clause 32B, further comprising: determining fourth information associated with the second geometry model representing a third portion of the point cloud geometry contained in a third sub-volume neighboring the second sub-volume; and

Clause 32D. The method of clause 32C, further comprising: decoding, based on the second information and the fourth information, third information associated with the second geometry model representing the second portion of the point cloud geometry. Reference to clause 32 herein may refer to one or each of clause 32A, clause 32B, clause 32C and clause 32D.

Clause 33. The method of clause 32, wherein: the third information indicates occupancy bit associated with each leaf node of a local spanning-tree representing the second portion of the point cloud geometry; and the third information is decoded based on the second information indicating occupancy bits of leaf nodes of a local space-partitioning tree representing the reconstructed first portion of the point cloud geometry.

Clause 34. The method of any one of clauses 32-33, wherein: the fourth information indicates occupancy bit associated with each leaf node of a local spanning-tree representing the third portion of the point cloud geometry; and the third information is decoded based on the second information and the fourth information.

Clause 35. The method of any one of clauses 32-34, wherein: the first geometry model is a tree-based geometry representation model representing the first portion of the point cloud geometry; and the second geometry model is a triangle-based geometry representation model representing: the reconstructed first portion of the point cloud geometry; the second portion of the point cloud geometry; and the third portion of the point cloud geometry.

Clause 36. The method of any one of clauses 32-35, wherein: the reconstructed first portion of the point cloud geometry is a set of points derived based on points defined as centers of sub-volumes of a space-partitioning of tree-based geometry representation model representing the first portion of the point cloud geometry.

Clause 37. The method of any one of clauses 32-36, wherein: triangle-based geometry representation model representing the reconstructed first portion of the point cloud geometry contained in the first sub-volume comprises at least one triangle defined by vertices located on edges of the first sub-volume.

Clause 38. The method of any one of clauses 32-37, wherein decoding the third information comprises entropy decoding from a bitstream, by a binary entropy coder.

Clause 39. The method of any one of clauses 32-38, wherein the decoding uses probabilities based on the contextual information.

Clause 40. The method of any one of clauses 32-39, wherein the binary entropy coder is a Context Adaptive Binary Arithmetic Coder in which the contexts are selected based on the contextual information.

Clause 41. The method of any one of clauses 32-40, wherein the binary entropy coder is Optimal Binary Coders with Update on the Fly (OBUF) or dynamic OBUF based on the contextual information.

Clause 42. The method of any one of clauses 32-41, wherein the third information indicates information related to the leaf nodes of the local space-partitioning tree.

Clause 43. The method of any one of clauses 32-42, wherein the local space-partitioning tree is an occupancy tree comprising occupied leaf nodes containing at least one point of the set of points.

Clause 44. The method of any one of clauses 32-43, wherein the minimum size is signaled in a bitstream.

Clause 45. The method of any one of clauses 32-44, wherein the stopping condition is fulfilled when a maximum depth is reached.

Clause 46. The method of any one of clauses 32-45, wherein the maximum depth is signaled in the bitstream.

Clause 47. The method of any one of clauses 32-46, wherein when the space-partitioning is a space-partitioning tree, the center point of each occupied leaf node of the space-partitioning tree is a point of the set of points.

Clause 48. The method of any one of clauses 32-47, wherein the second information includes vertex information of at least one vertex along at least one edge of the triangle vertices, at most one vertex per edge.

Clause 49. The method of any one of clauses 32-48, wherein one vertex along one edge of the first sub-volume is derived based on a sub-set of the set of points.

Clause 50. The method of any one of clauses 32-49, wherein the sub-set of points is derived based on points of the set of points having a distance lower than a threshold from the edge.

Clause 51. The method of any one of clauses 32-50, wherein position of one vertex along one edge of the first sub-volume is derived based on projection of points of the sub-set of points on the edge.

Clause 52. The method of any one of clauses 32-51, wherein projection of the points of the sub-set of points on the edge defines positions of the projected points of the sub-set of points on the edge.

Clause 53. The method of any one of clauses 32-52, wherein the position of the vertex along the edge is derived based on an average or median value of positions of the projected points of the sub-set on the edge.

Clause 54. The method of any one of clauses 32-53, wherein the third information indicates position of a vertex on an edge of the second sub-volume and the position of the vertex is entropy encoded by OBUF or dynamic OBUF based on the second information indicating position of at least one vertex along at least one edge of the first sub-volume.

Clause 55. The method of any one of clauses 32-54, wherein the fourth information indicates vertex information of vertex along edge of the third sub-volume and vertex information is entropy encoded by OBUF or dynamic OBUF based on the second and fourth information.

Clause 56. The method of any one of clauses 32-55, wherein the fourth information indicates presence of flag of a vertex on an edge of the third sub-volume and the presence flag is entropy encoded by OBUF or dynamic OBUF based on the second and fourth information.

Clause 57. The method of any one of clauses 32-56, wherein the fourth information indicates position of a vertex on an edge of the third sub-volume and the position of the vertex is entropy encoded by OBUF or dynamic OBUF based on the second and fourth information.

Clause 58. A computing device comprising one or more processors and memory storing instructions that, when executed by the one or more processors, cause the computing device to perform the method of any one of clauses 32-57.

Clause 59. A system comprising: a computing device configured to perform the method of any one of clauses 32-57, and a second computing device configured to encode the point cloud frame.

Clause 60. A computer-readable medium storing instructions that, when executed, cause performance of the method of any one of clauses 32-57.

Clause 61A. A method comprising: determining first information associated with a first geometry model representing a first portion of a point cloud geometry contained in a first sub-volume of the point cloud geometry.

Clause 61B. The method of clause 61A, further comprising: reconstructing the first portion of the point cloud geometry using the first information.

Clause 61C. The method of clause 61B, further comprising: determining, based on a second geometry model representing a second portion of the point cloud geometry contained in a second sub-volume neighboring the first sub-volume, second information associated with the second geometry model representing the reconstructed first portion, wherein and the first geometry model is different from the second geometry model.

Clause 61D. The method of clause 61C, further comprising: encoding, based on the second information, third information associated with the second geometry model representing the second portion of the point cloud geometry. Reference to clause 61 herein may refer to one or each of clause 61A, clause 61B, clause 61C and clause 61D.

Clause 62. The method of clause 61, further comprises: encoding, in a bitstream, a first indication indicating the second geometry model, wherein: the first indication indicates at least one of: a tree-based geometry representation model associated with the second sub-volume; or a triangle-based geometry representation model associated with the second sub-volume; and the first indication is signaled in the bitstream for at least one sub-volume containing a portion of the point cloud geometry.

Clause 63. The method of any one of clauses 61-62, wherein: the third information indicates vertex information of at least one vertex along edge of the second sub-volume; and the vertex information is encoded based on the second information indicating vertex information of at least one vertex along at least one edge of the first sub-volume.

Clause 64. The method of any one of clauses 61-63, wherein: the third information indicates a presence flag of at least one vertex on an edge of the second sub-volume; and the presence flag is encoded based on the second information indicating a presence flag of at least one vertex along at least one edge of the first sub-volume.

Clause 65. The method of any one of clauses 61-64, further comprising: determining fourth information associated with the second geometry model representing a third portion of a point cloud geometry contained in a third sub-volume neighboring the second sub-volume; and wherein the encoding the third information is based on the second and fourth information.

Clause 66. The method of any one of clauses 61-65, wherein the encoding the third information further comprises: binarizing the third information; and encoding, based on a contextual information derived from the second information, the binarized third information.

Clause 67. The method of any one of clauses 61-66, wherein encoding the third information comprises entropy encoding in a bitstream, by a binary entropy coder.

Clause 68. The method of any one of clauses 61-67,1 wherein the entropy encoding uses probabilities based on the contextual information.

Clause 69. The method of any one of clauses 61-68, wherein the binary entropy coder is a Context Adaptive Binary Arithmetic Coder in which the contexts are selected based on the contextual information.

Clause 70. The method of any one of clauses 61-69, wherein the binary entropy coder is Optimal Binary Coders with Update on the Fly (OBUF) or dynamic OBUF based on the contextual information.

Clause 71. The method of any one of clauses 61-70, wherein the third information indicates information related to the leaf nodes of the local space-partitioning tree.

Clause 72. The method of any one of clauses 61-71, wherein the local space-partitioning tree is an occupancy tree comprising occupied leaf nodes containing at least one point of the set of points.

Clause 73. The method of any one of clauses 61-72, wherein the minimum size is signaled in a bitstream.

Clause 74. The method of any one of clauses 61-73, wherein the stopping condition is fulfilled when a maximum depth is reached.

Clause 75. The method of any one of clauses 61-74, wherein the maximum depth is signaled in the bitstream.

Clause 76. The method of any one of clauses 61-75, wherein the center point of each occupied leaf node of the space-partitioning tree is a point of the set of points if the space-partitioning is a space-partitioning tree.

Clause 77. The method of any one of clauses 61-76, wherein the second information includes vertex information of at least one vertex along at least one edge of the triangle vertices, at most one vertex per edge.

Clause 78. The method of any one of clauses 61-77, wherein one vertex along one edge of the first sub-volume is derived based on a sub-set of the set of points.

Clause 79. The method of any one of clauses 61-78, wherein the sub-set of points is derived based on points of the set of points having a distance lower than a threshold from the edge.

Clause 80. The method of any one of clauses 61-79, wherein position of one vertex along one edge of the first sub-volume is derived based on projection of points of the sub-set of points on the edge.

Clause 81. The method of any one of clauses 61-80, wherein projection of the points of the sub-set of points on the edge defines positions of the projected points of the sub-set of points on the edge.

Clause 82. The method of any one of clauses 61-81, wherein the position of the vertex along the edge is derived based on an average or median value of positions of the projected points of the sub-set on the edge.

Clause 83. The method of any one of clauses 61-82, wherein the third information indicates position of a vertex on an edge of the second sub-volume and the position of the vertex is entropy encoded by OBUF or dynamic OBUF based on the second information indicating position of at least one vertex along at least one edge of the first sub-volume.

Clause 84. The method of any one of clauses 61-83, wherein the fourth information indicates vertex information of vertex along edge of the third sub-volume and vertex information is entropy encoded by OBUF or dynamic OBUF based on the second and fourth information.

Clause 85. The method of any one of clauses 61-84, wherein the fourth information indicates presence of flag of a vertex on an edge of the third sub-volume and the presence flag is entropy encoded by OBUF or dynamic OBUF based on the second and fourth information.

Clause 86. The method of any one of clauses 61-85, wherein the fourth information indicates position of a vertex on an edge of the third sub-volume and the position of the vertex is entropy encoded by OBUF or dynamic OBUF based on the second and fourth information.

Clause 87. A computing device comprising one or more processors and memory storing instructions that, when executed by the one or more processors, cause the computing device to perform the method of any one of clauses 61-86.

Clause 88. A system comprising: a computing device configured to perform the method of any one of clauses 61-86, and a second computing device configured to decode the point cloud frame.

Clause 89. A computer-readable medium storing instructions that, when executed, cause performance of the method of any one of clauses 61-86.

Clause 90A. A method comprising: obtaining first information associated with a tree-based geometry representation model representing a first portion of a point cloud geometry contained in a first sub-volume of a volume encompassing the point cloud geometry.

Clause 90B. The method of clause 90A, further comprising: reconstructing the first portion of the point cloud geometry using the first information.

Clause 90C. The method of clause 90B, further comprising: generating, based on a triangle-based geometry representation model representing a second portion of the point cloud geometry contained in a second sub-volume neighboring the first sub-volume, second information associated with the triangle-based geometry representation model representing the reconstructed first portion.

Clause 90D. The method of clause 90C, further comprising: encoding, in the bitstream and based on the second information, third information associated with the triangle-based geometry representation model representing the second portion of the point cloud geometry. Reference to clause 90 herein may refer to one or each of clause 90A, clause 90B, clause 90C and clause 90D.

Clause 91. A computing device comprising one or more processors and memory storing instructions that, when executed by the one or more processors, cause the computing device to perform the method of clause 90.

Clause 92. A system comprising: a computing device configured to perform the method of clause 90, and a second computing device configured to decode the point cloud frame.

Clause 93. A computer-readable medium storing instructions that, when executed, cause performance of the method of clause 90.

Clause 94A. A method comprising: obtaining first information associated with a tree-based geometry representation model representing a first portion of a point cloud geometry contained in a first sub-volume of a volume encompassing the point cloud geometry.

Clause 94B. The method of clause 94A, further comprising: reconstructing the first portion of the point cloud geometry using the first information.

Clause 94C. The method of clause 94B, further comprising: generating, based on a triangle-based geometry representation model representing a second portion of the point cloud geometry contained in a second sub-volume neighboring the first sub-volume, second information associated with the triangle-based geometry representation model representing the reconstructed first portion.

Clause 94D. The method of clause 94C, further comprising: decoding, from the bitstream and based on the second information, third information associated with the triangle-based geometry representation model representing the second portion of the point cloud geometry. Reference to clause 94 herein may refer to one or each of clause 94A, clause 94B, clause 94C and clause 94D.

Clause 95. A computing device comprising one or more processors and memory storing instructions that, when executed by the one or more processors, cause the computing device to perform the method of clause 94.

Clause 96. A system comprising: a computing device configured to perform the method of clause 94, and a second computing device configured to encode the point cloud frame.

Clause 97. A computer-readable medium storing instructions that, when executed, cause performance of the method of clause 94.

Clause 98A. A method comprising: obtaining first information associated with a triangle-based geometry representation model representing a first portion of a point cloud geometry contained in a first sub-volume of a volume encompassing the point cloud geometry.

Clause 98B. The method of clause 98A, further comprising: reconstructing the first portion of the point cloud geometry using the first information.

Clause 98C. The method of clause 98B, further comprising: generating, based on a tree-based geometry representation model representing a second portion of the point cloud geometry contained in a second sub-volume neighboring the first sub-volume, second information associated with the tree-based geometry representation model representing the reconstructed first portion.

Clause 98D. The method of clause 98C, further comprising: encoding, in the bitstream and based on the second information, third information associated with the tree-based geometry representation model representing the second portion of the point cloud geometry. Reference to clause 98 herein may refer to one or each of clause 98A, clause 98B, clause 98C and clause 98D.

Clause 99. A computing device comprising one or more processors and memory storing instructions that, when executed by the one or more processors, cause the computing device to perform the method of clause 98.

Clause 100. A system comprising: a computing device configured to perform the method of clause 98, and a second computing device configured to decode the point cloud frame.

Clause 101. A computer-readable medium storing instructions that, when executed, cause performance of the method of clause 98.

Clause 102A. A method comprising: obtaining first information associated with a triangle-based geometry representation model representing a first portion of a point cloud geometry contained in a first sub-volume of a volume encompassing the point cloud geometry.

Clause 102B. The method of clause 102A, further comprising: reconstructing the first portion of the point cloud geometry using the first information.

Clause 102C. The method of clause 102B, further comprising: generating, based on a tree-based geometry representation model representing a second portion of the point cloud geometry contained in a second sub-volume neighboring the first sub-volume, second information associated with the tree-based geometry representation model representing the reconstructed first portion.

Clause 102D. The method of clause 102C, further comprising: decoding, from the bitstream and based on the second information, third information associated with the tree-based geometry representation model representing the second portion of the point cloud geometry. Reference to clause 102 herein may refer to one or each of clause 102A, clause 102B, clause 102C and clause 102D.

Clause 103. A computing device comprising one or more processors and memory storing instructions that, when executed by the one or more processors, cause the computing device to perform the method of clause 102.

Clause 104. A system comprising: a computing device configured to perform the method of any one of clause 102, and a second computing device configured to encode the point cloud frame.

Clause 105. A computer-readable medium storing instructions that, when executed, cause performance of the method of clause 102.

A computing device may perform a method comprising multiple operations. The computing device may comprise a decoder. The computing device may determine first information associated with a first geometry model representing a first portion of a point cloud geometry contained in a first sub-volume of the point cloud geometry; reconstruct the first portion of the point cloud geometry using the first information; determine, based on a second geometry model representing a second portion of the point cloud geometry contained in a second sub-volume neighboring the first sub-volume, second information associated with the second geometry model representing the reconstructed first portion, wherein the first geometry model may be different from the second geometry model; and decode, based on the second information, third information associated with the second geometry model representing the second portion of the point cloud geometry. The computing device may determine fourth information associated with the second geometry model representing a third portion of the point cloud geometry contained in a third sub - volume neighboring the second sub-volume; and wherein the decoding the third information, from a bitstream, may be based on the second information and the fourth information. The computing device may decode, from a bitstream, a first indication indicating the second geometry model, wherein: the first indication may further indicate at least one of: a tree-based geometry model associated with the second sub-volume; or a triangle-based geometry model associated with the second sub-volume; and the first indication is signaled in the bitstream for one or more sub-volumes containing a portion of the point cloud geometry, wherein the decoding the third information further may comprise: binarizing the third information; and decoding, based on contextual information derived from the second information, the binarized third information, wherein: the first geometry model may be a triangle-based geometry model representing the first portion of the point cloud geometry; and the second geometry model may be a tree-based geometry model representing the reconstructed first portion of the point cloud geometry, the second portion of the point cloud geometry, and a third portion of the point cloud geometry; wherein: the reconstructed first portion of the point cloud geometry may comprise a set of points defined by voxelizing at least one triangle of the triangle-based geometry model; and the tree-based geometry model representing the reconstructed first portion of the point cloud geometry may comprise a local space-partitioning of first sub-volume determined by recursively splitting the first sub-volume into local sub-volumes containing at least one point of the set of points; wherein: the local space-partitioning may be a local space-partitioning tree; the second information may indicate occupancy bit associated with each leaf node of the local space-partitioning tree; and the local space-partitioning tree may be part of a master space-partitioning tree splitting a volume encompassing the point cloud geometry into sub-volumes; wherein: the local space-partitioning may be a local space-partitioning tree; and the recursive splitting of the first sub-volume may be stopped based on: a local sub-volume corresponding to each leaf node of the local space-partitioning tree may contain at least one point of the set of points; or a size of a local sub-volume corresponding to one leaf node of the local space-partitioning tree may be below a minimum size; wherein decoding the third information may comprise entropy decoding from a bitstream, by a binary entropy coder; wherein the entropy decoding may use probabilities based on the contextual information; wherein the binary entropy coder may be a Context Adaptive Binary Arithmetic Coder in which the contexts are selected based on the contextual information; wherein the binary entropy coder may be Optimal Binary Coders with Update on the Fly (OBUF) or dynamic OBUF based on the contextual information; wherein the third information may indicate information related to the leaf nodes of the local space-partitioning tree; wherein the local space-partitioning tree may be an occupancy tree comprising occupied leaf nodes containing at least one point of the set of points; wherein the minimum size may be signaled in a bitstream; wherein the stopping condition may be fulfilled when a maximum depth is reached; wherein the maximum depth may be signaled in the bitstream; wherein the center point of each occupied leaf node of the space-partitioning tree may be a point of the set of points if the space-partitioning is a space-partitioning tree; wherein the second information may include vertex information of at least one vertex along at least one edge of the triangle vertices, at most one vertex per edge; wherein one vertex along one edge of the first sub-volume may be derived based on a sub-set of the set of points; wherein the sub-set of points may be derived based on points of the set of points having a distance lower than a threshold from the edge; wherein position of one vertex along one edge of the first sub-volume may be derived based on projection of points of the sub-set of points on the edge; wherein projection of the points of the sub-set of points on the edge may define positions of the projected points of the sub-set of points on the edge; wherein the position of the vertex along the edge may be derived based on an average or median value of positions of the projected points of the sub-set on the edge; wherein the third information may indicate position of a vertex on an edge of the second sub-volume and the position of the vertex is entropy encoded by OBUF or dynamic OBUF based on the second information indicating position of at least one vertex along at least one edge of the first sub-volume; wherein the fourth information may indicate vertex information of vertex along edge of the third sub-volume and vertex information is entropy encoded by OBUF or dynamic OBUF based on the second and fourth information; wherein the fourth information may indicate presence of flag of a vertex on an edge of the third sub-volume and the presence flag is entropy encoded by OBUF or dynamic OBUF based on the second and fourth information; wherein the fourth information may indicate position of a vertex on an edge of the third sub-volume and the position of the vertex is entropy encoded by OBUF or dynamic OBUF based on the second and fourth information. The computing device may comprise one or more processors and memory, storing instructions that, when executed by the one or more processors, perform the method described herein. A system may comprise the computing device configured to perform the described method, additional operations, and/or include additional elements; and a second computing device configured to encode the point cloud frame. A computer-readable medium may store instructions that, when executed, cause performance of the described method, additional operations, and/or include additional elements.

A computing device may perform a method comprising multiple operations. The computing device may comprise a decoder. The computing device may determine first information associated with a first geometry model representing a first portion of a point cloud geometry contained in a first sub-volume of the point cloud geometry; determine, based on a second geometry model representing a second portion of the point cloud geometry contained in a second sub-volume neighboring the first sub-volume, second information associated with the second geometry model representing a reconstructed first portion of the point cloud geometry, wherein and the first geometry model is different from the second geometry model; determine fourth information associated with the second geometry model representing a third portion of the point cloud geometry contained in a third sub-volume neighboring the second sub-volume; and decode based on the second information and the fourth information, third information associated with the second geometry model representing the second portion of the point cloud geometry; wherein: the third information may indicate occupancy bit associated with each leaf node of a local spanning-tree representing the second portion of the point cloud geometry; and the third information may be decoded based on the second information indicating occupancy bits of leaf nodes of a local space-partitioning tree representing the reconstructed first portion of the point cloud geometry; wherein: the fourth information may indicate occupancy bit associated with each leaf node of a local spanning-tree representing the third portion of the point cloud geometry; and the third information may be decoded based on the second information and the fourth information; wherein: the first geometry model may be a tree-based geometry representation model representing the first portion of the point cloud geometry; and the second geometry model may be a triangle-based geometry representation model representing: the reconstructed first portion of the point cloud geometry; the second portion of the point cloud geometry; and the third portion of the point cloud geometry; wherein: the reconstructed first portion of the point cloud geometry may be a set of points derived based on points defined as centers of sub-volumes of a space-partitioning of tree-based geometry representation model representing the first portion of the point cloud geometry; wherein: triangle-based geometry representation model representing the reconstructed first portion of the point cloud geometry contained in the first sub-volume may comprise at least one triangle defined by vertices located on edges of the first sub-volume; wherein decoding the third information may comprise entropy decoding from a bitstream, by a binary entropy coder; wherein the entropy decoding may use probabilities based on the contextual information; wherein the binary entropy coder may be a Context Adaptive Binary Arithmetic Coder in which the contexts are selected based on the contextual information; wherein the binary entropy coder may be Optimal Binary Coders with Update on the Fly (OBUF) or dynamic OBUF based on the contextual information; wherein the third information may indicate information related to the leaf nodes of the local space-partitioning tree; wherein the local space-partitioning tree may be an occupancy tree comprising occupied leaf nodes containing at least one point of the set of points; wherein the minimum size may be signaled in a bitstream; wherein the stopping condition may be fulfilled when a maximum depth is reached; wherein the maximum depth may be signaled in the bitstream; wherein the center point of each occupied leaf node of the space-partitioning tree may be a point of the set of points if the space-partitioning is a space-partitioning tree; wherein the second information may include vertex information of at least one vertex along at least one edge of the triangle vertices, at most one vertex per edge; wherein one vertex along one edge of the first sub-volume may be derived based on a sub-set of the set of points; wherein the sub-set of points may be derived based on points of the set of points having a distance lower than a threshold from the edge; wherein position of one vertex along one edge of the first sub-volume may be derived based on projection of points of the sub-set of points on the edge; wherein projection of the points of the sub-set of points on the edge may define positions of the projected points of the sub-set of points on the edge; wherein the position of the vertex along the edge may be derived based on an average or median value of positions of the projected points of the sub-set on the edge; wherein the third information may indicate position of a vertex on an edge of the second sub-volume and the position of the vertex is entropy encoded by OBUF or dynamic OBUF based on the second information indicating position of at least one vertex along at least one edge of the first sub-volume; wherein the fourth information may indicate vertex information of vertex along edge of the third sub-volume and vertex information is entropy encoded by OBUF or dynamic OBUF based on the second and fourth information; wherein the fourth information may indicate presence of flag of a vertex on an edge of the third sub-volume and the presence flag is entropy encoded by OBUF or dynamic OBUF based on the second and fourth information; wherein the fourth information may indicate position of a vertex on an edge of the third sub-volume and the position of the vertex is entropy encoded by OBUF or dynamic OBUF based on the second and fourth information. The computing device may comprise one or more processors and memory, storing instructions that, when executed by the one or more processors, perform the method described herein. A system may comprise the computing device configured to perform the described method, additional operations, and/or include additional elements; and a second computing device configured to encode the point cloud frame. A computer-readable medium may store instructions that, when executed, cause performance of the described method, additional operations, and/or include additional elements.

A computing device may perform a method comprising multiple operations. The computing device may comprise an encoder. The computing device may determine first information associated with a first geometry model representing a first portion of a point cloud geometry contained in a first sub-volume of the point cloud geometry; reconstruct the first portion of the point cloud geometry using the first information; determine based on a second geometry model representing a second portion of the point cloud geometry contained in a second sub-volume neighboring the first sub-volume, second information associated with the second geometry model representing the reconstructed first portion, wherein and the first geometry model is different from the second geometry model; and encode, based on the second information, third information associated with the second geometry model representing the second portion of the point cloud geometry. The computing device may encode, in a bitstream, a first indication indicating the second geometry model, wherein: the first indication may indicate at least one of: a tree-based geometry representation model associated with the second sub-volume; or a triangle-based geometry representation model associated with the second sub-volume; and the first indication is signaled in the bitstream for at least one sub-volume containing a portion of the point cloud geometry; wherein: the third information may indicate vertex information of at least one vertex along edge of the second sub-volume; and the vertex information may be encoded based on the second information indicating vertex information of at least one vertex along at least one edge of the first sub-volume; wherein: the third information may indicate a presence flag of at least one vertex on an edge of the second sub-volume; and the presence flag may be encoded based on the second information indicating a presence flag of at least one vertex along at least one edge of the first sub-volume. The computing device may determine fourth information associated with the second geometry model representing a third portion of a point cloud geometry contained in a third sub-volume neighboring the second sub-volume; and wherein the encoding the third information may be based on the second and fourth information; wherein the encoding the third information may further comprise: binarizing the third information; and encoding, based on a contextual information derived from the second information, the binarized third information; wherein encoding the third information may comprise entropy encoding in a bitstream, by a binary entropy coder; wherein the entropy encoding may use probabilities based on the contextual information; wherein the binary entropy coder may be a Context Adaptive Binary Arithmetic Coder in which the contexts are selected based on the contextual information; wherein the binary entropy coder may be Optimal Binary Coders with Update on the Fly (OBUF) or dynamic OBUF based on the contextual information; wherein the third information may indicate information related to the leaf nodes of the local space-partitioning tree; wherein the local space-partitioning tree may be an occupancy tree comprising occupied leaf nodes containing at least one point of the set of points; wherein the minimum size may be signaled in a bitstream; wherein the stopping condition may be fulfilled when a maximum depth is reached; wherein the maximum depth may be signaled in the bitstream; wherein the center point of each occupied leaf node of the space-partitioning tree may be a point of the set of points if the space-partitioning is a space-partitioning tree; wherein the second information may include vertex information of at least one vertex along at least one edge of the triangle vertices, at most one vertex per edge; wherein one vertex along one edge of the first sub-volume may be derived based on a sub-set of the set of points; wherein the sub-set of points may be derived based on points of the set of points having a distance lower than a threshold from the edge; wherein position of one vertex along one edge of the first sub-volume may be derived based on projection of points of the sub-set of points on the edge; wherein projection of the points of the sub-set of points on the edge may define positions of the projected points of the sub-set of points on the edge; wherein the position of the vertex along the edge may be derived based on an average or median value of positions of the projected points of the sub-set on the edge; wherein the third information may indicate position of a vertex on an edge of the second sub-volume and the position of the vertex is entropy encoded by OBUF or dynamic OBUF based on the second information indicating position of at least one vertex along at least one edge of the first sub-volume; wherein the fourth information may indicate vertex information of vertex along edge of the third sub-volume and vertex information is entropy encoded by OBUF or dynamic OBUF based on the second and fourth information; wherein the fourth information may indicate presence of flag of a vertex on an edge of the third sub-volume and the presence flag is entropy encoded by OBUF or dynamic OBUF based on the second and fourth information; wherein the fourth information may indicate position of a vertex on an edge of the third sub-volume and the position of the vertex is entropy encoded by OBUF or dynamic OBUF based on the second and fourth information. The computing device may comprise one or more processors and memory, storing instructions that, when executed by the one or more processors, perform the method described herein. A system may comprise the computing device configured to perform the described method, additional operations, and/or include additional elements; and a second computing device configured to decode the point cloud frame. A computer-readable medium may store instructions that, when executed, cause performance of the described method, additional operations, and/or include additional elements.

A computing device may perform a method comprising multiple operations. The computing device may comprise an encoder. The computing device may obtain first information associated with a tree-based geometry representation model representing a first portion of a point cloud geometry contained in a first sub-volume of a volume encompassing the point cloud geometry; reconstruct the first portion of the point cloud geometry using the first information; generate, based on a triangle-based geometry representation model representing a second portion of the point cloud geometry contained in a second sub-volume neighboring the first sub-volume, second information associated with the triangle-based geometry representation model representing the reconstructed first portion; and encode, in the bitstream and based on the second information, third information associated with the triangle-based geometry representation model representing the second portion of the point cloud geometry. The computing device may comprise one or more processors and memory, storing instructions that, when executed by the one or more processors, perform the method described herein. A system may comprise the computing device configured to perform the described method, additional operations, and/or include additional elements; and a second computing device configured to decode the point cloud frame. A computer-readable medium may store instructions that, when executed, cause performance of the described method, additional operations, and/or include additional elements.

A computing device may perform a method comprising multiple operations. The computing device may comprise an decoder. The computing device may obtain first information associated with a tree-based geometry representation model representing a first portion of a point cloud geometry contained in a first sub-volume of a volume encompassing the point cloud geometry; reconstruct the first portion of the point cloud geometry using the first information; generate, based on a triangle-based geometry representation model representing a second portion of the point cloud geometry contained in a second sub-volume neighboring the first sub-volume, second information associated with the triangle-based geometry representation model representing the reconstructed first portion; and decode, from the bitstream and based on the second information, third information associated with the triangle-based geometry representation model representing the second portion of the point cloud geometry. The computing device may comprise one or more processors and memory, storing instructions that, when executed by the one or more processors, perform the method described herein. A system may comprise the computing device configured to perform the described method, additional operations, and/or include additional elements; and a second computing device configured to encode the point cloud frame. A computer-readable medium may store instructions that, when executed, cause performance of the described method, additional operations, and/or include additional elements.

A computing device may perform a method comprising multiple operations. The computing device may comprise an encoder. The computing device may obtain first information associated with a triangle-based geometry representation model representing a first portion of a point cloud geometry contained in a first sub-volume of a volume encompassing the point cloud geometry; reconstruct the first portion of the point cloud geometry using the first information; generate, based on a tree-based geometry representation model representing a second portion of the point cloud geometry contained in a second sub-volume neighboring the first sub-volume, second information associated with the tree-based geometry representation model representing the reconstructed first portion; and encode, in the bitstream and based on the second information, third information associated with the tree-based geometry representation model representing the second portion of the point cloud geometry. The computing device may comprise one or more processors and memory, storing instructions that, when executed by the one or more processors, perform the method described herein. A system may comprise the computing device configured to perform the described method, additional operations, and/or include additional elements; and a second computing device configured to decode the point cloud frame. A computer-readable medium may store instructions that, when executed, cause performance of the described method, additional operations, and/or include additional elements.

A computing device may perform a method comprising multiple operations. The computing device may comprise an decoder. The computing device may obtain first information associated with a triangle-based geometry representation model representing a first portion of a point cloud geometry contained in a first sub-volume of a volume encompassing the point cloud geometry; reconstruct the first portion of the point cloud geometry using the first information; generate, based on a tree-based geometry representation model representing a second portion of the point cloud geometry contained in a second sub-volume neighboring the first sub-volume, second information associated with the tree-based geometry representation model representing the reconstructed first portion; and decode, from the bitstream and based on the second information, third information associated with the tree-based geometry representation model representing the second portion of the point cloud geometry. The computing device may comprise one or more processors and memory, storing instructions that, when executed by the one or more processors, perform the method described herein. A system may comprise the computing device configured to perform the described method, additional operations, and/or include additional elements; and a second computing device configured to encode the point cloud frame. A computer-readable medium may store instructions that, when executed, cause performance of the described method, additional operations, and/or include additional elements.

One or more examples herein may be described as a process which may be depicted as a flowchart, a flow diagram, a data flow diagram, a structure diagram, and/or a block diagram. Although a flowchart may describe operations as a sequential process, one or more of the operations may be performed in parallel or concurrently. The order of the operations shown may be re-arranged. A process may be terminated when its operations are completed, but could have additional steps not shown in a figure. A process may correspond to a method, a function, a procedure, a subroutine, a subprogram, etc. If a process corresponds to a function, its termination may correspond to a return of the function to the calling function or the main function.

Operations described herein may be implemented by hardware, software, firmware, middleware, microcode, hardware description languages, or any combination thereof. When implemented in software, firmware, middleware or microcode, the program code or code segments to perform the necessary tasks (e.g., a computer-program product) may be stored in a computer-readable or machine-readable medium. A processor(s) may perform the necessary tasks. Features of the disclosure may be implemented in hardware using, for example, hardware components such as application-specific integrated circuits (ASICs) and gate arrays. Implementation of a hardware state machine to perform the functions described herein will also be apparent to persons skilled in the art.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein. Computer-readable medium may comprise, but is not limited to, portable or non-portable storage devices, optical storage devices, and various other mediums capable of storing, containing, or carrying instruction(s) and/or data. A computer-readable medium may include a non-transitory medium in which data can be stored and that does not include carrier waves and/or transitory electronic signals propagating wirelessly or over wired connections. Examples of a non-transitory medium may include, but are not limited to, a magnetic disk or tape, optical storage media such as compact disk (CD) or digital versatile disk (DVD), flash memory, memory or memory devices. A computer-readable medium may have stored thereon code and/or machine-executable instructions that may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, or the like.

A non-transitory tangible computer readable media may comprise instructions executable by one or more processors configured to cause operations described herein. An article of manufacture may comprise a non-transitory tangible computer readable machine-accessible medium having instructions encoded thereon for enabling programmable hardware to cause a device (e.g., an encoder, a decoder, a transmitter, a receiver, and the like) to allow operations described herein. The device, or one or more devices such as in a system, may include one or more processors, memory, interfaces, and/or the like.

Communications described herein may be determined, generated, sent, and/or received using any quantity of messages, information elements, fields, parameters, values, indications, information, bits, and/or the like. While one or more examples may be described herein using any of the terms/phrases message, information element, field, parameter, value, indication, information, bit(s), and/or the like, one skilled in the art understands that such communications may be performed using any one or more of these terms, including other such terms. For example, one or more parameters, fields, and/or information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls. 1

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more of the operations described herein may be conditional. For example, one or more operations may be performed if certain criteria are met, such as in computing device, a communication device, an encoder, a decoder, a network, a combination of the above, and/or the like. Example criteria may be based on one or more conditions such as device configurations, traffic load, initial system set up, packet sizes, traffic characteristics, a combination of the above, and/or the like. If the one or more criteria are met, various examples may be used. It may be possible to implement any portion of the examples described herein in any order and based on any condition.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

**Claims**

1. A method comprising:

   determining first information associated with a first geometry model representing a first portion of a point cloud geometry contained in a first sub-volume of the point cloud geometry;
   reconstructing the first portion of the point cloud geometry using the first information;
   determining, based on a second geometry model representing a second portion of the point cloud geometry contained in a second sub-volume neighboring the first sub-volume, second information associated with the second geometry model representing the reconstructed first portion, wherein the first geometry model is different from the second geometry model; and
   decoding, based on the second information, third information associated with the second geometry model representing the second portion of the point cloud geometry.

2. The method of claim 1, further comprising:

   determining fourth information associated with the second geometry model representing a third portion of the point cloud geometry contained in a third sub-volume neighboring the second sub-volume; and
   wherein the decoding the third information, from a bitstream, is based on the second information and the fourth information.

3. The method of any one of claims 1-2, further comprising:
   decoding, from a bitstream, a first indication indicating the second geometry model, wherein:

   the first indication further indicates at least one of:

      a tree-based geometry model associated with the second sub-volume; or
      a triangle-based geometry model associated with the second sub-volume; and

   the first indication is signaled in the bitstream for one or more sub-volumes containing a portion of the point cloud geometry.

4. The method of any one of claims 1-3, wherein the decoding the third information further comprises:

   binarizing the third information; and
   decoding, based on contextual information derived from the second information, the binarized third information.

5. The method of any one of claims 1-4, wherein:

   the first geometry model is a triangle-based geometry model representing the first portion of the point cloud geometry; and
   the second geometry model is a tree-based geometry model representing the reconstructed first portion of the point cloud geometry, the second portion of the point cloud geometry, and a third portion of the point cloud geometry.

6. The method of claim 5, wherein:

   the reconstructed first portion of the point cloud geometry comprises a set of points defined by voxelizing at least one triangle of the triangle-based geometry model; and
   the tree-based geometry model representing the reconstructed first portion of the point cloud geometry comprises a local space-partitioning of first sub-volume determined by recursively splitting the first sub-volume into local sub-volumes containing at least one point of the set of points.

7. The method of claim 6, wherein:

   the local space-partitioning is a local space-partitioning tree;
   the second information indicates occupancy bit associated with each leaf node of the local space-partitioning tree; and
   the local space-partitioning tree is part of a master space-partitioning tree splitting a volume encompassing the point cloud geometry into sub-volumes.

8. The method of claim 6, wherein:

   the local space-partitioning is a local space-partitioning tree; and
   the recursive splitting of the first sub-volume is stopped based on:

      a local sub-volume corresponding to each leaf node of the local space-partitioning tree contains at least one point of the set of points; or
      a size of a local sub-volume corresponding to one leaf node of the local space-partitioning tree is below a minimum size.

9. A method comprising:

   determining first information associated with a first geometry model representing a first portion of a point cloud geometry contained in a first sub-volume of the point cloud geometry;
   determining, based on a second geometry model representing a second portion of the point cloud geometry contained in a second sub-volume neighboring the first sub-volume, second information associated with the second geometry model representing a reconstructed first portion of the point cloud geometry, wherein and the first geometry model is different from the second geometry model;
   determining fourth information associated with the second geometry model representing a third portion of the point cloud geometry contained in a third sub-volume neighboring the second sub-volume; and
   decoding, based on the second information and the fourth information, third information associated with the second geometry model representing the second portion of the point cloud geometry.

10. The method of claim 9, wherein:

   the third information indicates occupancy bit associated with each leaf node of a local spanning-tree representing the second portion of the point cloud geometry; and
   the third information is decoded based on the second information indicating occupancy bits of leaf nodes of a local space-partitioning tree representing the reconstructed first portion of the point cloud geometry.

**11.** The method of any one of claims 9-10, wherein:

the fourth information indicates occupancy bit associated with each leaf node of a local spanning-tree representing the third portion of the point cloud geometry; and
the third information is decoded based on the second information and the fourth information.

**12.** The method of any one of claims 9-11, wherein:

the first geometry model is a tree-based geometry representation model representing the first portion of the point cloud geometry; and
the second geometry model is a triangle-based geometry representation model representing:

the reconstructed first portion of the point cloud geometry;
the second portion of the point cloud geometry; and

the third portion of the point cloud geometry.

**13.** A computing device comprising: one or more processors; and memory storing instructions that, when executed by the one or more processors, cause the computing device to perform:

the method of any one of claims 1-8; or
the method of any one of claims 9-12.

**14.** A system comprising:

a computing device configured to perform:

the method of any one of claims 1-8; or
the method of any one of claims 9-12; and

a second computing device configured to encode the point cloud frame.

**15.** A computer-readable medium storing instructions that, when executed, cause performance of:

the method of any one of claims 1-8; or
the method of any one of claims 9-12.

FIG. 1

FIG. 2

$occW_{2,2} = 10011000$

$occW_{3,2} = 11110001$

$occW_{3,4} = 00010010$

$occW_{3,3} = 00001000$

$occW_{1,1} = 10000001$

$occW_{3,1} = 00110001$

$occW_{2,1} = 10000000$

**FIG. 3**

FIG. 4

EP 4 583 055 A1

*FIG. 5*

Determine occupancy configuration β
*602*

Dynamically reduce using $DR^n$
*604*

Lookup context index in LUT
*606*

Select context
*608*

Entropy code occupancy of current
child cuboid
*610*

*FIG. 6*

FIG. 7

EP 4 583 055 A1

FIG. 8A

FIG. 8B

EP 4 583 055 A1

FIG. 8C

*FIG. 9A*

$$u+v+w = 1$$
$$0 \leq u, v, w$$

$$P = uA + vB + wC$$

*FIG. 9B*

EP 4 583 055 A1

*FIG. 10*

**FIG. 11**

EP 4 583 055 A1

first sub-volume 1211                                   third sub-volume 1251

| obtain first information | | obtain fourth information |
| 1210 | | 1250 |

first information 1212                          fourth information 1252

| reconstruct geometry of the first sub-volume |
| 1220 |

second sub-volume 1231        Reconstructed first portion 1222

| obtain third information | | obtain second information |
| 1235 | | 1230 |

second information 1232

third information 1241        | coding third information |
| 1240 |

1200

*FIG. 12*

**FIG. 13**

*FIG. 14C*

*FIG. 14B*

*FIG. 14A*

EP 4 583 055 A1

FIG. 15

**FIG. 16**

FIG. 17

EP 4 583 055 A1

FIG. 18A

FIG. 18B

FIG. 18C

FIG. 19

EP 4 583 055 A1

Determine first information
2010

Reconstruct the first sub-volume of geometry
2020

Determine second information
2030

Encode third information
2040

2000

*FIG. 20A*

Determine first information
2060

Reconstruct the first sub-volume of geometry
2070

Determine second information
2080

Decode third information
2090

2050

*FIG. 20B*

FIG. 21

FIG. 22

| | Europäisches Patentamt European Patent Office Office européen des brevets | **EUROPEAN SEARCH REPORT** | **Application Number** EP 25 15 0210 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 033 186 A (TENCENT TECH SHENZHEN CO LTD) 28 April 2023 (2023-04-28) * the whole document * ----- | 1-15 | INV. G06T9/00 G06T9/40 |
| A | US 2021/320960 A1 (HUR HYEJUNG [KR] ET AL) 14 October 2021 (2021-10-14) * paragraphs [0144] - [0149]; figures 6,11 * * paragraphs [0304] - [0308]; figure 21 * * paragraph [0271] * ----- | 1-15 | |
| A | "G-PCC 2nd edition codec description", 143. MPEG MEETING; 20230717 - 20230721; GENEVA; (MOTION PICTURE EXPERT GROUP OR ISO/IEC JTC1/SC29/WG11), , no. n23041 4 October 2023 (2023-10-04), XP030311995, Retrieved from the Internet: URL:https://dms.mpeg.expert/doc_end_user/d ocuments/143_Geneva/wg11/MDS23041_WG07_N00 648.zip MDS23041_WG07_N00648_v1.docx [retrieved on 2023-10-04] * page 24, paragraph 3.9 - page 26 * * page 27, paragraph 4 - page 29 * * page 101, paragraph 10.2 - page 108, paragraph 10.12 * ----- -/-- | 1-15 | TECHNICAL FIELDS SEARCHED (IPC) G06T |

The present search report has been drawn up for all claims

| Place of search | Date of completion of the search | Examiner |
|---|---|---|
| Berlin | 21 May 2025 | Santos Luque, Rocio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)

page 1 of 2

## EUROPEAN SEARCH REPORT

Application Number

EP 25 15 0210

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | LASSERRE (OFINNO) S ET AL: "[GPCC][new] On mixing triangle and tree models", 145. MPEG MEETING; 20240122 - 20240126; ONLINE; (MOTION PICTURE EXPERT GROUP OR ISO/IEC JTC1/SC29/WG11), , no. m65915 7 January 2024 (2024-01-07), XP030313739, Retrieved from the Internet: URL:https://dms.mpeg.expert/doc_end_user/d ocuments/145_OnLine/wg11/m65915-v1-m65915% 5BGPCC%5D%5Bnew%5DOnmixingtriangleandtreem odels.zip m65915 [GPCC][new] On mixing triangle and tree models.pptx [retrieved on 2024-01-07] * the whole document * | 1-15 | |

-----

TECHNICAL FIELDS
SEARCHED      (IPC)

The present search report has been drawn up for all claims

| Place of search | Date of completion of the search | Examiner |
|---|---|---|
| Berlin | 21 May 2025 | Santos Luque, Rocio |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
......................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 15 0210

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2025

| Patent document cited in search report | Publication date | Patent family member(s) | | Publication date |
|---|---|---|---|---|
| CN 116033186 A | 28-04-2023 | NONE | | |
| US 2021320960 A1 | 14-10-2021 | CN | 115428467 A | 02-12-2022 |
| | | CN | 117834863 A | 05-04-2024 |
| | | EP | 4131975 A1 | 08-02-2023 |
| | | KR | 102300045 B1 | 08-09-2021 |
| | | US | 2021320960 A1 | 14-10-2021 |
| | | WO | 2021210743 A1 | 21-10-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63618118